Europäisches Patentamt

European Patent Office

Office européen des brevets

(11) Veröffentlichungsnummer : **0 007 586**
**B1**

(12) EUROPÄISCHE PATENTSCHRIFT

(45) Veröffentlichungstag der Patentschrift :
09.09.81

(51) Int. Cl.³ : **C 04 B 15/06**, C 04 B 31/02

(21) Anmeldenummer : 79102551.3

(22) Anmeldetag : 19.07.79

(54) Verfahren zur Herstellung von Calciumsilikatgranulaten beziehungsweise -pulvern mit Mikroporenstruktur.

(30) Priorität : 21.07.78 DE 2832194

(43) Veröffentlichungstag der Anmeldung :
06.02.80 (Patentblatt 80/03)

(45) Bekanntmachung des Hinweises auf die Patenterteilung : 09.09.81 Patentblatt 81/36

(84) Benannte Vertragsstaaten :
AT BE CH FR GB IT LU NL SE

(56) Entgegenhaltungen :
BE - A - 530 812
FR - A - 801 832
US - A - 3 144 346

Chemical Abstracts, Vol. 82, Nr. 24, 16. Juni 1975,
Seite 235, Nr. 159781v, COLUMBUS, OHIO, U.S.A.
K. TOSHIYUKI et al.

(73) Patentinhaber : MINORA, Forschungs- und Entwicklungsgesellschaft für organische und anorganische Baustoffe
mit beschränkter Haftung Karlstrasse 59
D-4950 Minden (DE)

(72) Erfinder : Krämer, Walter, Ing.-Chem.
Uhlenkamp 1
D-3040 Soltau-Friedrichseck (DE)
Erfinder : Follmann, Heinrich, Ing.-Chem.
Alemannenstrasse 1
D-4950 Minden (DE)

(74) Vertreter : Beszédes, Stephan G., Dr.
Am Heideweg 2 Postfach 1168
D-8060 Dachau (DE)

## Verfahren zur Herstellung von Calciumsilikatgranulaten beziehungsweise -pulvern mit Mikroporenstruktur

Die Erfindung betrifft ein Verfahren zur Herstellung von Calciumsilikatgranulaten beziehungsweise -pulvern oder genauer Calciumsilikathydratgranulaten beziehungsweise -pulvern mit Mikroporenstruktur mit vielseitigen Anwendungsmöglichkeiten.

Ausgehend von der Entwicklung auf dem Baustoffgebiet zeigt sich in Verbindung mit dem bevorzugten Einsatz von wärmedämmenden Mauerwerkstoffen der verschiedensten Art ein stetig zunehmender Bedarf an wärmedämmenden Putz- und Mauermörteln.

Bei den zur Zeit eingesetzten Fertigmörteln werden vorzugsweise Leichtzuschlagstoffe, die entweder geblähte Materialien mineralischen Ursprunges, wie Perlite, Vermiculite oder gebrochener Gasbetonsplitt, oder organische Produkte, wie Polystyrolperlen, sind, verwendet.

Nach den vorliegenden Erfahrungen ist festzustellen, daß die mit derartigen Leichtzuschlagstoffen hergestellten Putze und Mörtel in der Regel nur dann eine ausreichende Mörtelfestigkeit aufweisen, wenn der Bindemittelanteil relativ hoch eingestellt wird. Dies hat zur Folge, daß die angestrebte niedrige Rohdichte (in der praktischen Anwendung unter Druckbelastung) nicht eingehalten wird und dabei in den zur Rohdichte in Beziehung stehenden Wärmedämmwerten erhebliche Abweichungen entstehen.

Die Ursache dieser nachteiligen Wirkungen liegt in der ungenügenden Korneigenfestigkeit der genannten bekannten Leichtzuschlagstoffe.

Aus der US-Patentschrift 3 144 346 ist ein Verfahren zur Herstellung von leichten Calciumsilikathydratkörpern, wie Calciumsilikathydratplatten, durch Einspritzen eines mittels eines Schaumbildners, wie Alkylnaphthalinsulfonates, durch Belüften einer wäßrigen Lösung desselben vorgeformten Schaumes unter Druck unter die Oberfläche einer stabilen Aufschlämmung mit einem Gehalt an einem siliciumhaltigen Bestandteil, wie Siliciumdioxydmehl, und einem kalkhaltigen Bestandteil, wie gebranntem Kalk und/oder gelöschtem Kalk, in Wasser unter Verwendung eines Zusatzes eines porösen leichten Zuschlagstoffes, wie von Bimsstein, ausgewähltem Klinker, geblähtem Perlit, geblähtem Schiefer, geblähtem Ton, Vermiculit, geschäumter Schlacke und gesintertem Zuschlag, und Härten, wie Autoklavhärten, der erhaltenen Masse, so daß das lufthaltige Calciumsilikathydrat als Grundmasse die Teilchen des porösen leichten Zuschlagstoffes an diesen haftend umgibt, bekannt. Von einem Zerkleinern, Trocknen und Klassieren der notwendigerweise einen porösen leichten Zuschlagstoff enthaltenden erhaltenen Produkte ist keine Rede. Dieses Verfahren hat jedoch den Nachteil, daß durch es nur Produkte mit zu hohem Schüttgewicht beziehungsweise zu niedriger Druckfestigkeit erhalten werden können und durch ihre Zerkleinerung völlig unannehmbare Produkte entstehen würden.

Ferner ist in der deutschen Auslegeschrift 26 17 153 ein Verfahren zur Herstellung leichter Schaumbetonkörper, bei welchem einer rasch abbindenden hydraulischen Zementmasse in Form eines feinteiligen trockenen Pulvers eine einen Schaumbildner, wie ein Alkylsulfonsäuresalz, und ein Abbindehemmittel enthaltende wäßrige aufgeschäumte Flüssigkeit zugesetzt wird, bekannt. Als hydraulische Zementmasse ist auch ein Gemisch aus Tonerdezement, Calciumoxyd oder -hydroxyd und einem beim Aushärten bei erhöhter Temperatur und erhöhtem Druck vornehmlich kristallines Calciumsilikathydrat der Tobermoritgruppe bildenden hydraulischen Material erwähnt. Die Erzeugung des Schaumes wird mittels Rührens, beispielsweise in einem Schaumgefäß mit einem Rührflügel, durchgeführt, wobei es zweckmäßig ist, die wäßrige aufgeschäumte Flüssigkeit in den Mischer derart einzuführen, daß in diese keine Frischluft eindringen kann. Dabei wird die aufzuschäumende Masse in Form eines trockenen Pulvers verwendet. Offensichtlich wird also das Aufschäumen der für die Schaumerzeugung eingesetzten Bestandteile mit einem solchen Wasserüberschuß und in einer solchen Menge vorgenommen, daß diese hierbei eingesetzte Wassermenge ausreicht, um dieser aufgeschäumten wäßrigen Lösung die zum Aufschäumen eingesetzten trockenen Bestandteile zuzusetzen. Das ist die übliche bekannte Technik zur Herstellung von grobporigen Baustoffen, die den Nachteil hat, daß durch sie keine Produkte mit Mikroporen erhalten werden können. Auch wird beim Verfahren der deutschen Auslegeschrift 26 17 153 ein Schaum mit einem aus der Fließgeschwindigkeit der wäßrigen Schäumflüssigkeit von 6,4 l/Minute, der Fließgeschwindigkeit des ihr ferner zugesetzten Wassers von 57,5 l/Minute und der Fließgeschwindigkeit der abgezogenen aufgeschäumten Zementaufschlämmung von 200 l/Minute sich ergebenden Litergewicht von $\dfrac{100}{\dfrac{200}{57,5+6,4}} = 323$ g/l, welches mit

der Einbeziehung des exakterweise noch zu berücksichtigenden Volumens der eingesetzten Feststoffe noch höher ist, verwendet. Von einem Zerkleinern, Trocknen und Klassieren des neben dem Calciumsilikathydrat zwingend weitere Stoffe (Tonerdezement und Calciumoxyd oder Calciumhydroxyd) enthaltenden hydraulischen Materiales ist auch in dieser Druckschrift keine Rede. Auch dieses Verfahren hat den Nachteil, daß durch es nur Produkte mit zu hoher Dichte beziehungsweise zu niedriger Druckfestigkeit erhalten werden können und durch ihre Zerkleinerung völlig unannehmbare Produkte entstehen würden.

Weiterhin ist aus der deutschen Auslegeschrift 23 33 317 ein Verfahren zur Herstellung einer Rohmasse, die zur Herstellung von porösen Baustrukturen beziehungsweise -materialien geeignet sein soll, bei welchem Verfahren vorzugsweise eine homogene Aufschlämmung, die eine hydraulische Verbindung und Wasser enthält, zu einer homogen geschäumten Mischung, die ein Treibmittel, einen Schaumstabilisator und Wasser enthält, zugegeben wird und die entsprechende Mischung gerührt und zusammen verknetet wird, bekannt. Gemäß dieser Druckschrift ist es auch möglich, umgekehrt die geschäumte Mischung zur Aufschlämmung zuzugeben, wobei aber dies gemäß Spalte 4, Zeile 36 bis 40 und Spalte 4, Zeile 64 bis 66 der genannten Druckschrift weniger bevorzugt ist und in Spalte 4, Zeile 68 bis Spalte 5, Zeile 2 derselben mit dem Hinweis, daß es in diesem Falle schwierig ist, poröse Baustrukturen mit niedrigem spezifischem Gewicht herzustellen, davon direkt abgeraten wird. Als hydraulische Verbindungen sind neben Portlandzement, Tonerdezement, Hochofenzement und Hüttenzement auch Mischungen von ungelöschtem Kalk und Kieselsand, wenn auch als weniger bevorzugt, erwähnt, wobei kein Beispiel eine solche betrifft. Als Treibmittel sind unter anderem harzartige Seifen genannt. Dabei handelt es sich um ein hydraulisches Abbinden der Zementminerale mit einer Hydrothermalerhärtung unter Bildung von Calciumsilikathydrat, die jedoch als Oberflächenreaktion anzusehen ist und nur insoweit eine Verfestigung des Betongefüges bewirkt. Anders ausgedrückt ist dies als eine Verkittung der Zuschlagstoffe durch CSH-Bildung anzusprechen. Der Schaum wird durch Rühren der Aufschlämmung mit Luft erzeugt, was jedoch den großen Nachteil hat, daß kein Mikroporenschaum zu erzielen ist. Auch ist zwingend die Verwendung eines Schaumstabilisators erforderlich. Von einem Zerkleinern, Trocknen und Klassieren der erhaltenen Produkte ist keine Rede.

Außerdem ist aus der deutschen Auslegeschrift 20 23 089 ein Verfahren zur Herstellung von Granulaten oder Formkörpern aus staubförmigen mineralischen Stoffen, insbesondere Gesteinsmehl, Tonstaub oder Flugasche, bei welchem die staubförmigen mineralischen Stoffe mit Wasser zur Bereitung einer breiigen formbaren Masse versetzt werden und der Masse ein Schaummittel zugesetzt wird, worauf die Gesamtmischung durch Zusatz eines hydraulischen Bindemittels erhärtet wird, bekannt. Als Schaumbildner können unter anderem Alkylsulfonate verwendet werden. Von der Erzeugung des Schaumes mittels komprimierter Luft ist keine Rede. Auch wird im Beispiel dieser Druckschrift ein Schaum, dessen

Litergewicht sich zu $\dfrac{100\,000 + 1\,000}{300} = 337$ g/l

bis $\dfrac{100\,000 + 1\,000}{200} = 505$ g/l errechnet, verwendet. Nach der deutschen Auslegeschrift 20 23 089 erfolgt ausschließlich eine hydraulische Erhärtung, was zwangsläufig zu einer geringeren Festigkeit dieser Granulate, bezogen auf die Rohdichte führt. Wegen der anderen Zielsetzung dieses Verfahrens wäre eine Autoklavenhärtung nicht sinnvoll. Auch wird beim Verfahren der genannten Druckschrift keine Zerkleinerung durchgeführt und, soweit Granulate hergestellt werden, erfolgt deren Bildung aus der mit Schaum behandelten Masse mit einem Granulierteller, worauf erst die hydraulische Erhärtung durchgeführt wird.

Weiterhin ist in der deutschen Offenlegungsschrift 25 48 912 ein Verfahren zur Herstellung von anorganischen Schaumkörpern durch Einmischen eines mit Wasser abbindefähigen pulverförmigen Materiales in einen wäßrigen Schaum, welcher durch Einbringen von Luft in eine wäßrige Lösung, die ein schäumendes Netzmittel, ein wasserlösliches Aluminiumsalz und Kaliumsulfat enthält, gewonnen worden ist, beschrieben. Als pulverförmige Materialien werden Gipshalbhydrat, Anhydrit, Portlandzement oder Tonerdeschmelzzement oder deren Mischungen verwendet. Als Netzmittel kann ein Alkylsulfonat verwendet werden. Der Schaum wird durch Einschlagen von Luft, beispielsweise mittels eines Korbrührers, erzeugt, so daß der bei der Erörterung der deutschen Auslegeschrift 26 17 153 beschriebene Nachteil, daß kein Mikroporenschaum zu erzielen ist, besteht. Der Gips, Anhydrit oder Zement wird in trockener Form in den Schaum eingemischt. Das Litergewicht des Schaumes errechnet sich aus der Angabe des Entstehens einer Schaummenge von $4\,000$ cm$^3$ aus einer Lösung von $1\,000$ cm$^3$ in der deutschen Offenlegungsschrift 25 48 912 zu 250 g/l. Beim Verfahren der deutschen Offenlegungsschrift 25 48 912 erfolgt ausschließlich ein hydraulisches Abbinden ohne Hydrothermalbedingungen. Auch von einem Zerkleinern der Produkte dieses Verfahrens ist keine Rede.

Ferner ist aus der britischen Patentschrift 1 461 656 die Herstellung von porösen Baustoffen aus Wasser, einer hydraulischen Substanz und einem Schaummittel mit einem Gehalt an wasserlöslichen Cellulosederivaten und einem hydrolysierten Polyvinylester bekannt. Als hydraulische Substanz ist neben Portlandzement und Tonerdezement auch eine Mischung aus kieselsäurehaltigem Sand und Ätzkalk erwähnt. Dabei handelt es sich analog wie beim Verfahren der deutschen Auslegeschrift 23 33 317 wiederum um ein hydraulisches Abbinden der Zementminerale mit einer Hydrothermalerhärtung unter Bildung von Calciumsilikathydrat, die jedoch als Oberflächenreaktion anzusehen ist und nur insoweit eine Verfestigung des Betongefüges bewirkt. Der Schaum wird durch Rühren der Aufschlämmung mit Luft erzeugt, was jedoch den großen Nachteil hat, daß kein Mikroporenschaum zu erzielen ist. Es ist auch ohne Veranschaulichung in Beispielen lediglich erwähnt, daß alternativ die Schaumerzeugung durch Rühren der zu schäumenden Lösung bei Einblasen von Luft bewerkstelligt werden kann. Auch diese Alternativverfahrensweise führt jedoch stets zu Makroporen. Im Verfahren der britischen Patentschrift 1 461 656 wird auch keine anionenaktive grenzflächenaktive Substanz zur Schaumerzeugung verwendet, sondern zwingend ein wasserlösliches Cellulosederivat, welches keine anionenaktive grenzflächenaktive Substanz, sondern eine nicht-ionogene Substanz ist, als Schäummittel. Auch ist zwingend die Verwendung eines Schaumstabilisators (eines weiteren Cellulosederivates) und eines Schaumbeschleunigers (hydrolysierten Polyvinylesters) vorgeschrieben. Von einem Zerkleinern der erhaltenen Produkte ist keine Rede.

Weiterhin ist aus der deutschen Offenlegungsschrift 25 45 006 ein Verfahren zur Herstellung von Leichtbeton genau vorherbestimmbarer und reproduzierbarer Rohdichte, bei welchem angemachtem Beton eine bestimmte Menge eines vorgefertigten Schaumes zugemischt wird, bekannt. Es handelt sich anders ausgedrückt um die Herstellung von Leichtbeton mit Makroporenstruktur unter Verwendung von Zement und Sand. So wird nach dem Patentanspruch 3 der deutschen Offenlegungsschrift 25 45 006 ein Leichtbeton der Rohdichte 500 kg/m³ aus einem Gemisch, bestehend aus Zement, Wasser und Schaumflüssigkeit hergestellt, wobei das Volumen der Schaumflüssigkeit 1,18 l beträgt. Daraus ergibt sich, daß es sich um eine aufgeschäumte Zementschlämme, die eine grobporige Struktur mit Makroporen mit Porenradien von größer als 500 μ hat, einen sogenannten Zellenbeton handelt. Bei den anderen Ausführungsformen dieses bekannten Verfahrens entstehen Makroporen mit noch größeren Porenradien. Von der Verwendung von komprimierter Luft zur Schaumerzeugung ist keine Rede. Auf Grund der Art des Verfahrens der genannten Druckschrift können bei ihm praktisch nur Schäume mit Litergewichten von mindestens etwa 75 g/l eingesetzt werden. Auch ist keine Autoklavenhärtung vorgesehen. Von einer Zerkleinerung der erhaltenen Produkte ist ebenfalls keine Rede.

Außerdem ist in der deutschen Offenlegungsschrift 26 06 975 ein Verfahren zur Herstellung von leichten porösen Bau- und/oder Isolierstoffen, bei welchem ein oder mehrere feinkörnige, keramisch, hydraulisch oder chemisch abbindende Stoffe in plastischem Zustand mit einer noch nicht ausgehärteten mechanisch aufgeschäumten Zweikomponentenschaummasse, die als erste Komponente ein oder mehrere schaumbildende oberflächenaktive Mittel und als zweite Komponente einen oder mehrere Strukturstoffe in wäßriger Lösung, Dispersion oder Emulsion enthält, vermischt werden, das erhaltene Gemisch vor oder während des Aushärtens der Schaummasse verformt wird und das verformte Gemisch getrocknet und gebrannt oder hydraulisch oder chemisch abbinden gelassen wird, beschrieben. Als Schaumbildner sind beispielsweise Alkylsulfonate erwähnt. Bei den Strukturmaterialien handelt es sich um hochmolekulare Stoffe. Als Beispiele für feinkörnige keramisch, hydraulisch oder chemisch abbindende Stoffe sind außer Ton, Tonschiefer, Kaolin, Schamotte, Zement, Magnesit, Gips, Flugasche, Laterit und Bauxit auch geschäumte Zementprodukte und Kalksandstein ohne diese betreffende Beispiele erwähnt. Der letztere besteht aus etwa 92 Gew.-% Sand und etwa 8 Gew.-% Kalk, so daß aus ihm nur Produkte mit einem geringen Anteil von C-S-H-Phasen erhalten werden können, wobei diesbezüglich analog wie beim Verfahren der deutschen Auslegeschrift 23 33 317 nur eine Oberflächenreaktion stattfindet. Von einer Schaumerzeugung mittels komprimierter Luft ist keine Rede. Es ist auch kein Zerkleinern der erhaltenen Produkte vorgesehen.

Ferner ist aus der belgischen Patentschrift 530 812 ein Verfahren zur Herstellung von porösen Mörteln, insbesondere Mörteln aus Kalk und Sand, durch Zugabe von Harzseifen in Form eines Schaumes zu den Mörtelbestandteilen bekannt, wobei nach einer Alternative der Schaum durch Einleiten eines Luftstromes in die Harzseifenlösung erzeugt werden kann, bekannt. Es ist jedoch kein Autoklavenhärten vorgesehen. Daher kann unter keinen Umständen ein Calciumsilikatprodukt entstehen. Vielmehr werden diese Kalk/Sand-Mörtel in der üblichen Weise hergestellt, das heißt sowohl die Rohstoffe als auch die Erhärtung unterliegen keiner besonderen Vorbehandlung. Die Erhärtung von derartigen Mörteln erfolgt durch Carbonatisierung, unter der Einwirkung der atmosphärischen Kohlensäure entsteht hierbei Calciumcarbonat. Neben der infolge der Carbonatisierung entstehenden Verfestigung, die vorzugsweise im Bereich der atmosphärischen Zugänglichkeit erfolgt, wird die Festigkeit des Kalk/Sand-Mörtels auch durch Wasserentzug aus diesen bewirkt. Dieses Verfahren hat unter anderem den Nachteil, daß durch es nur Produkte mit hohem Schüttgewicht, die für viele Anwendungszwecke ungeeignet sind, erhalten werden können, wobei sie dennoch keine überragenden Festigkeitseigenschaften aufweisen.

Auch ist in Chemical Abstracts, Vol. 82, Nr. 24, 16. Juni 1975, Seite 235, Nr. 159781v ein Verfahren zur Herstellung von leichten Calciumsilikatbaumaterialien durch Vermischen von Siliciumdioxydenebenprodukten der Herstellung von Silicium/Eisen-Legierungen mit einer Ferrochromschlacke mit niedrigem Kohlenstoffgehalt, Ca(OH)₂ oder CaO und Wasser, Gelieren der erhaltenen Aufschlämmung durch Erhitzen, Formen und Härten durch Erhitzen, wobei das Erhitzen zum Gelieren 1 Stunde und 15 Minuten bei 85 bis 95 °C durchgeführt wird, angegeben. Bei diesem Verfahren wird aber überhaupt kein Schaum, geschweige denn ein Mikroporenschaum, zugesetzt. Die Produkte dieses Verfahrens haben den Nachteil der viel zu geringen Festigkeit.

Schließlich ist es aus der französischen Patentschrift 801 832 bekannt, bei der Herstellung von Zementprodukten durch Vermischen von siliciumhaltigen und/oder tonhaltigen Materialien mit Kalk und einer Sauerstoffsäure des Schwefels, Zugabe von Wasser, Formen sowie Hydratisieren- und Erhärtenlassen des Kalkes der Mischung durch Wasserdampf unter Druck als Kalk eine Mischung von gebranntem Kalk und Kalkhydrat, in welcher der Anteil des ersteren mindestens 5 Gew.-%, beispielsweise 10 bis 20 Gew.-%, beträgt, zu verwenden. Auch bei diesem Verfahren erfolgt keine Schaumzugabe.

Der Erfindung liegt die Aufgabe zugrunde, unter Behebung der Nachteile des Standes der Technik ein einfaches und wirtschaftliches Verfahren zur Herstellung von Granulaten beziehungsweise Pulvern mit Mikroporen sowie überlegener Festigkeit bei niedriger Dichte, die sich als druckfeste Leichtzuschlagstoffe mit abgestuftem Körnungsaufbau und äußerst hohem Weißheitsgrad eignen und weitere Anwendungsmöglichkeiten haben, unter Verwendung von allgemein zugänglichen mineralischen Rohstoffen zu schaffen.

Das Obige wurde erfindungsgemäß überraschenderweise erreicht.

Gegenstand der Erfindung ist ein Verfahren zur Herstellung von Calciumsilikatgranulaten beziehungsweise. -pulvern mit Mikroporenstruktur durch Umsetzen von kristallinem und gegebenenfalls amorphem Siliciumdioxyd beziehungsweise dieses oder diese enthaltenden Materialien mit Calciumoxyd beziehungsweise dieses enthaltenden Materialien in einem Molverhältnis von CaO zu $SiO_2$ von 0,8 : 1 bis 1,1 : 1 unter Homogenisieren derselben durch Dispergieren der festen Ausgangsstoffe in Wasser unter Zugabe einer vorher in Wasser in Gegenwart von Luft in einen Schaum überführten anionenaktiven grenzflächenaktiven Substanz und Formen sowie Autoklavenhärten, welches dadurch gekennzeichnet ist, daß als Schaum ein mikroporiger stabiler Schaum, welcher aus einer durch Verdünnen mit Wasser bereiteten Lösung der anionenaktiven grenzflächenaktiven Substanz in feinster Verteilung in komprimierter Luft erzeugt worden ist und ein Litergewicht von 30 bis 80 g/l aufweist, verwendet wird, wobei die anionenaktive grenzflächenaktive Substanz (unverdünnt gerechnet) in einer Menge von etwa 300 bis 600 $g/m^3$ Fertigprodukt eingesetzt wird, und ohne Zuschlagstoff gearbeitet wird sowie das gehärtete Produkt in an sich bekannter Weise zerkleinert, getrocknet und klassiert wird.

Das erfindungsgemäße Verfahren bringt den großen technischen Fortschritt mit sich, daß durch es Granulate beziehungsweise Pulver mit homogener mikroporiger Struktur und mit einer Korneigenfestigkeit, welche den Anforderungen an druckfeste Wärmedämmputze und -mörtel ausgezeichnet genügt, sowie einem äußerst hohen Weißheitsgrad hergestellt werden.

Im allgemeinen werden Produkte mit Porenradien von weniger als 100 μ, vorzugsweise weniger als 60 μ, insbesondere 20 μ, erhalten.

Im einzelnen sind die wesentlichsten Vorteile des erfindungsgemäßen Verfahrens wie folgt :

a) Durch es werden Produkte mit einer Korneigenfestigkeit, welche analog der der verschiedenen wärmedämmenden, Baustoffe ist beziehungsweise sogar höher liegt, erhalten.

b) Durch es können Produkte mit einem Schüttgewicht von etwa 250 $kg/m^3$ erzielt werden.

c) Die erfindungsgemäß hergestellten Produkte sind von mineralischer Struktur und so im Materialverhalten den wärmedämmenden Baustoffen angeglichen.

d) Durch das erfindungsgemäße Verfahren können Produkte mit dem äußerst hohen relativen Weißheitsgrad von 86 bis 92, gemessen gegenüber dem Basisprodukt Bariumsulfat, hergestellt werden, was bei der Anwendung als Leichtzuschlagstoff für Putze, zum Beispiel Wärmedämmputze, von besonderer Bedeutung ist, da damit eine homogene weiße Putzstruktur erzielt wird.

e) Das erfindungsgemäße Verfahren ist einfach und wirtschaftlich durchführbar.

Das Obige wird erfindungsgemäß in erster Linie auf der silikatchemischen Grundlage der synthetischen Calciumsilikatherstellung unter den Bedingungen der Autoklavenhärtung erreicht, wobei das Molverhältnis von CaO zu $SiO_2$ so eingestellt ist, daß als Reaktionsprodukt vorzugsweise ein solches von C-S-H der Tobermoritphase, in welchem freier Quarz und freier Kalk höchstens nur in Spuren vorhanden sind, erhalten wird.

Nach dem erfindungsgemäßen Verfahren können Calciumsilikatgranulate beziehungsweise -pulver mit den folgenden Materialparameterwerten erhalten werden (hier und im folgenden bedeutet die internationale Dimension $N/mm^2$ Newton/Quadratmillimeter = 10 $kp/cm^2$) :

| | |
|---|---|
| Druckfestigkeit in $N/mm^2$ | 6,5 bis 10,2 |
| Rohdichte in $kg/m^3$ | 400 bis 700 |
| Schüttgewicht in $kg/m^3$ | 250 bis 500 |
| (Schüttgewicht in $kg/m^3$ der Korngrößen bis 2,5 mm | 300 bis 500 |
| Schüttgewicht in $kg/m^3$ der Korngrößen von 2,5 bis 4 mm | 250 bis 450) |

So werden durch das erfindungsgemäße Verfahren Produkte mit niedrigerem Schüttgewicht und höherer Druckfestigkeit als durch das Verfahren der US-Patentschrift 3 144 346 erzielt. Dies sei im einzelnen betrachtet.

A) US-Patentschrift 3 144 346

a) Schüttgewicht (dry apparent density) Spalte 2, Zeile 12 : 640 bis 720 $kg/m^3$ Spalte 2, Zeile 17 bis 28 : 320 bis 1 280 $kg/m^3$.

Hier ist aber vermerkt, daß bei solchen leichteren beziehungsweise schwereren Produkten (leichter als 640 $kg/m^3$ beziehungsweise schwerer als 720 $kg/m^3$) die Druckfestigkeit außerhalb des angegebenen Bereiches liegen kann, was darauf hinauskommt, daß bei den leichteren Produkten die Druckfestigkeit geringer ist als der angegebene Bereich derselben.

Beispiel 7 (bestes Beispiel) : 674 $kg/m^3$.

b) Druckfestigkeit (saturated compressive strength)

Spalte 2, Zeile 13 : 4,2 bis 6,3 N/mm²
Beispiel 7 (bestes Beispiel) : 6,7 N/mm².
B) Erfindungsgemäßes Verfahren
  a) Schüttgewicht

Vorstehende Zusammenstellung:

|  | 250 bis 500 kg/m³ |
|---|---|
| Beispiel 1: | 250 bis 500 kg/m³ |
| Beispiel 2: | 250 bis 500 kg/m³ |
| Beispiel 3: | 250 bis 500 kg/m³ |

  b) Druckfestigkeit

Vorstehende Zusammenstellung:

| | 6,5 bis 10,2 N/mm² |
|---|---|
| Beispiel 1: | 7,5 bis 10,2 N/mm² |
| | (bei der geringeren Rohdichte von 400 kg/m³) (bei der höheren Rohdichte von 700 kg/m³) |
| Beispiel 2: | 7,5 bis 10,2 N/mm² |
| | (bei der geringeren Rohdichte von 400 kg/m³) (bei der höheren Rohdichte von 700 kg/m³) |
| Beispiel 3: | 6,5 bis 8,5 N/mm² |
| | (bei der geringeren Rohdichte von 400 kg/m³) (bei der höheren Rohdichte von 700 kg/m³). |

Aus dem Obigen ergibt sich, daß selbst im besten Beispiel der US-Patentschrift 3 144 346, dem Beispiel 7, das Schüttgewicht mit 674 kg/m³ erheblich höher als der Schüttgewichtbereich von 250 bis 500 kg/m³ der nach dem erfindungsgemäßen Verfahren erhaltenen Produkte liegt, es sich also bei den letzteren um leichtere Produkte handelt. Trotz des Inkaufnehmens des erheblich größeren Schüttgewichtes wird aber mit einer Druckfestigkeit von 6,7 N/mm² auch nur ein Wert erreicht, welcher nahe der unteren Grenze (6,5 N/mm²) des Druckfestigkeitsbereiches der nach dem erfindungsgemäßen Verfahren erhaltenen Produkte liegt.

Demgegenüber wird in den Beispielen 1 und 2 der vorliegenden Patentanmeldung selbst bei der geringsten Rohdichte von 400 kg/m³, die einem Schüttgewicht von 250 kg/m³ entspricht, schon die höhere Druckfestigkeit von 7,5 N/mm² und bei der Rohdichte von 700 kg/m³, die einem Schüttgewicht von 500 kg/m³, welches immer noch niedriger als das im Beispiel 7 der US-Patentschrift 3 144 346 erzielbare Schüttgewicht von 674 kg/m³ ist, entspricht, die noch viel höhere Druckfestigkeit von 10,2 N/mm² erreicht. Im Beispiel 3 der vorliegenden Patentanmeldung wird schon bei der Rohdichte von 400 kg/m³, die einem Schüttgewicht von 250 kg/m³ entspricht, die Druckfestigkeit von 6,5 N/mm² erreicht und bei der Rohdichte von 700 kg/m³, die einem Schüttgewicht von 500 kg/m³, welches immer noch niedriger als das im Beispiel 7 der US-Patentschrift 3 144 346 erzielbare Schüttgewicht von 674 kg/m³ ist, entspricht, noch die viel höhere Druckfestigkeit von 8,5 N/mm² erreicht.

Analog fällt auch der Vergleich der allgemeinen Bereiche der Schüttgewichte und der Druckfestigkeiten zu Gunsten des erfindungsgemäßen Verfahrens aus. Die Bereiche der Schüttgewichte von 250 bis 500 kg/m³ und der Druckfestigkeiten von 6,5 bis 10,2 N/mm² der Produkte des erfindungsgemäßen Verfahrens liegen durchwegs außerhalb (die ersteren unterhalb und die letzteren oberhalb) der in Spalte 2, Zeile 12 bis 14 der US-Patentschrift 3 144 346 für deren Produkte angegebenen Bereiche der Schüttgewichte von 640 bis 720 kg/m³ und der Druckfestigkeiten von 4,2 bis 6,3 N/mm². Dabei sind also selbst das schlechteste Schüttgewicht und die schlechteste Druckfestigkeit der nach dem erfindungsgemäßen Verfahren erhaltenen Produkte noch besser als das beste Schüttgewicht und die beste Druckfestigkeit der nach der US-Patentschrift 3 144 346 erhaltenen Produkte. Die Bereiche der Schüttgewichte von 250 bis 500 kg/m³ und der Druckfestigkeiten von 6,5 bis 10,2 N/mm² der Produkte des erfindungsgemäßen Verfahrens sind aber auch bei Betrachtung des in Spalte 2, Zeile 17 bis 28 der US-Patentschrift 3 144 346 allgemein vage (ohne Angabe der zugehörigen Druckfestigkeitsbereiche) angegebenen Bereiches der Schüttgewichte von 320 bis 1 280 kg/m³ überlegen. Es ist klar, daß, wenn schon einem Schüttgewicht von 640 kg/m³ eine Druckfestigkeit von nur 4,2 N/mm² zugehörig ist, bei einem noch geringeren Schüttgewicht, wie 500 kg/m³ oder gar 320 kg/m³, nur eine noch geringere Druckfestigkeit als 4,2 N/mm² zu erzielen ist.

Es ist zu beachten, daß zur Erzielung all dieser Werte auch der Zusatz des porösen leichten Zuschlagstoffes erforderlich ist. Einen weiteren großen Vorteil des erfindungsgemäßen Verfahrens stellt das Weglassen der Zugabe dieses Zuschlages dar, zumal der letztere nach der US-Patentschrift 3 144 346 (vergleiche Spalte 5, Zeile 37 bis 55 und die Beispiele) auch noch speziell zu behandeln ist.

Auch konnte der Fachmann aus der US-Patentschrift 3 144 346 keine Anregung zur Verwendung von vorgefertigtem mikroporigem stabilem Schaum ohne Zusatz eines geblähten porösen leichten Zuschlagstoffes im Sinne der vorliegenden Erfindung oder gar eines solchen Schaumes nach den erfindungsgemäßen Festlegungen gewinnen, weil er nämlich aus der US-Patentschrift 3 144 346 zwingend die Vorstellung gewinnen mußte, den vorfabrizierten Schaum nur in Kombination mit einem geblähten porösen leichten Zuschlagstoff zu verwenden. Es kann nämlich vernünftigerweise nicht angenommen werden, daß ein Bestandteil, zumal ein solcher, welcher einer speziellen Vorbereitung bedarf, verwendet würde, wenn er keinen Zweck zu erfüllen hätte. So lehrte die US-Patentschrift 3 144 346 dem Fachmann, daß es der Verwendung des speziell vorbereiteten geblähten porösen leichten Zuschlagstoffes bedurfte, um überhaupt diskutable Werte des Schüttgewichtes und insbesondere der Druckfestigkeit zu erhalten.

Nach der US-Patentschrift 3 144 346 wurde der geblähte poröse leichte Zuschlagstoff deswegen verwendet, weil ihre Technik zur Erzeugung eines tragfähigen stabilen Mikroschaumes nicht ausreichte, um eine Stabilisierung des durch den Aufschäumungsvorgang aufgelockerten Stoffgefüges in flüssiger Phase zu gewährleisten. Es ist das Ziel, daß Entmischungsvorgänge nicht in solchem Umfange stattfinden, daß eine heterogene Materialstruktur entsteht (Vermeidung der Qualitätsminderung). Die US-Patentschrift 3 144 346 versucht, durch geblähte poröse leichte Zuschlagstoffe den qualitätsmindernden Einfluß der nicht ausreichenden Tragfähigkeit (nicht ausreichenden Druckfestigkeit) zu korrigieren. Diese sollen zur Verminderung der Entmischungsvorgänge beitragen. Derartige poröse Zuschlagstoffe sind geblähte Stoffe von körniger Struktur. Um im genannten Sinne zu wirken, müssen sie zumindest eine Teilchengröße weit über 100 μ haben. Daher ist in Spalte 5, Zeile 45 bis 50 der US-Patentschrift 3 144 346 von Teilchengrößen des geblähten porösen leichten Zuschlagstoffes von nur weniger als 19 mm beziehungsweise weniger als 6,4 mm die Rede, wobei Teilchen mit Teilchengrößen von weniger als 150 beziehungsweise 160 μ verworfen wurden, und in allen Beispielen wurden geblähte poröse leichte Zuschlagstoffe mit Teilchengrößen über 150 μ verwendet. Wenn die geblähten porösen leichten Zuschlagstoffe geringere Teilchengrößen hätten, dann wären diese Zuschlagstoffe zwecklos, indem ihre Poren zerstört wären.

Das Obige hat aber noch die weitere ganz bedeutende Folge, daß die Produkte des Verfahrens der US-Patentschrift 3 144 346 beim Zerkleinern von ihrer wie bereits dargelegt an sich schon bei weitem geringeren Druckfestigkeit als die der Produkte des erfindungsgemäßen Verfahrens so viel enbüßen würden, daß sie unannehmbar wären. Dies ist der Grund, warum die US-Patentschrift 3 144 346 von einem Zerkleinern der nach ihr erhaltenen Produkte gar nicht sprechen kann, indem auf deren Verfahren das Zerkleinern gar nicht anwendbar ist.

Es sei auch besonders betont, daß durch die Durchführung der Erzeugung des mikroporigen stabilen Schaumes beim erfindungsgemäßen Verfahren in der Weise, daß die durch Verdünnen mit Wasser bereitete Lösung der anionenaktiven grenzflächenaktiven Substanz in feinster Verteilung in der komprimierten Luft vorliegt, gegenüber der Schaumerzeugung durch Belüften der Lösung der anionenaktiven grenzflächenaktiven Substanz beim Verfahren der US-Patentschrift 3 144 346 und die erfindungsgemäß festgelegten Schaumparameter die Produkte von dessen Verfahren eine andere Porenstruktur (feiner porig) haben als die des Verfahrens der US-Patentschrift 3 144 346. Dabei haben die Produkte des erfindungsgemäßen Verfahrens eine kleinere Porengröße als Wasser. Dagegen sind die Produkte des Verfahrens der US-Patentschrift 3 144 346 wesentlich grobporiger und dennoch nicht so tragfähig, das heißt, daß sie eine geringere Druckfestigkeit haben, wie es bereits oben nachgewiesen wurde. Für optimale Produkte kommt es aber

a) auf die gewünschte Mikroporenstruktur und
b) eine gute Tragfähigkeit

an. Es ist hervorzuheben, daß die für die Produkte des erfindungsgemäßen Verfahrens nachgewiesenen überragenden Eigenschaften des überlegenen Schüttgewichtes und der überlegenen Druckfestigkeit nur beim Einhalten der festgelegten Schaumparameter erzielt werden können.

Wegen der genannten Zusammensetzung des Ausgangsgemisches des Verfahrens der deutschen Auslegeschrift 26 17 153 haben dessen Produkte ähnliche Eigenschaften mit denselben Nachteilen wie die der Produkte der US-Patentschrift 3 144 346, also die Produkte des erfindungsgemäßen Verfahrens auch gegenüber denen der ersteren dieselben Vorteile.

Auch ist infolge der Schaumerzeugung mittels komprimierter Luft beim erfindungsgemäßen Verfahren gegenüber der Schaumerzeugung durch Mischen der zur Schaumbildung eingesetzten Bestandteile, wie Schaumflüssigkeit, Treibmittel, Abbindehemmittel und Wasser, in einem Schäumgefäß mittels Rührflügel beim Verfahren der deutschen Auslegeschrift 26 17 153 die Schaumqualität im ersteren Fall unvergleichlich besser als im letzteren. Beim Verfahren der genannten Druckschrift kann sich nämlich nur ein, insbesondere gegenüber Lufteinwirkung, instabiler und grobporiger Schaum, der zumindest bei der nachfolgenden nicht auszuschließenden Lufteinwirkung sehr schnell zerfällt, mit Porenradien in der Größenordnung von 500 bis 3 000 μ bilden. Unterhalb dieses Bereiches zerplatzt durch die Instabilität des Schaumes die gebildete Schaumpore und es bilden sich zwangsläufig Poren mit größeren Radien. Auch wirkt sich als bedeutender Vorteil des erfindungsgemäßen Verfahrens bei dessen Produkten im Gegensatz zu denen des Verfahrens der genannten Druckschrift aus, daß erfindungsgemäß Schäume mit den viel geringeren Litergewichten von 30 bis 80 g/l verwendet werden als das Litergewicht von mehr als 323 g/l des beim Verfahren der genannten Druckschrift verwendeten Schaumes. Dadurch werden nämlich erfindungsgemäß leichtere Produkte als nach dem Verfahren der genannten Druckschrift erhalten. Auch muß im Gegensatz zum Verfahren der genannten Druckschrift beim erfindungsgemäßen Verfahren kein großer Wasserüberschuß zur Schaumerzeugung eingesetzt werden, wobei es genügt, so viel anionenaktive grenzflächenaktive Substanz einzusetzen, wie es unbedingt zur Bildung eines stabilen Mikroporenschaumes erforderlich ist, denn die festen Ausgangsstoffe werden in Wasser dispergiert mit dem mikroporigen stabilen Schaum versetzt.

Aus den bei Erörterung der US-Patentschrift 3 144 346 genannten Gründen würde eine Zerkleinerung auch der Produkte des Verfahrens der

deutschen Auslegeschrift 26 17 153 wegen ihres zwingenden Gehaltes an Zuschlagstoffen neben dem Calciumsilikathydrat zu völlig unannehmbaren Produkten führen.

Im einzelnen ergibt sich, daß nach dem erfindungsgemäßen Verfahren bereits vor dem Trocknen schon bei einer Rohdichte von 400 kg/m³ eine Druckfestigkeit von mindestens 6,5 N/mm² erreicht wird, während das nach dem Trocknen erhaltene Produkt des Beispieles 1 der genannten Druckschrift erst bei der höheren Rohdichte von 603 kg/mm³ eine Druckfestigkeit von 6,3 N/mm² hat und das Produkt von deren Beispiel 2 noch schlechter ist. Dies ist insbesondere darauf zurückzuführen, daß der andere stoffliche Aufbau beim erfindungsgemäßen Verfahren im Gegensatz zum Verfahren der genannten Druckschrift zu einer vollständigen Stoffumsetzung führt und die Stabilität der einzelnen Poren, die erfindungsgemäß Mikroporen im Gegensatz zu den Makroporen beim Verfahren der genannten Druckschrift sind, im ersteren Fall unvergleichlich besser ist als im letzteren.

Gegenüber dem Verfahren der deutschen Auslegeschrift 23 33 317 bringt das erfindungsgemäße Verfahren den großen technischen Fortschritt mit sich, daß seine Calciumsilikatprodukte Mikroporen aufweisen, während durch das Verfahren der genannten Druckschrift nur Produkte mit Makroporen mit Porenradien von stets größer als 500 μ zu erzielen ist. Dies ist vor allem auf die grundlegend verschiedene Schaumerzeugung (in komprimierter Luft beim erfindungsgemäßen Verfahren gegenüber nur Rühren beim genannten bekannten Verfahren) zurückzuführen, wobei die Schaumerzeugung nach der genannten Druckschrift keinen Mikroporenschaum zu ergeben vermag. Auch im übrigen sind die nach den beiden Verfahren erhaltenen Produkte voneinander völlig verschieden. Beim Verfahren der genannten Druckschrift führt nämlich dessen Mischungszusammensetzung und das Aufschäumen der letzteren zu einem Leichtbetonkörper, dessen Gefüge mittels Schaum aufgelockert wird, wobei Calciumsilikatbildung allenfalls nur oberflächlich möglich ist, während beim erfindungsgemäßen Verfahren eine völlige Calciumsilikatbildung mit Mikroporenstruktur eintritt. Einen weiteren Vorteil als Vereinfachung bedeutet es, daß beim erfindungsgemäßen Verfahren die Stabilität des Mikroporenschaumes derart ist, daß im Gegensatz zum Verfahren der genannten Druckschrift die Verwendung eines Schaumstabilisators nicht erforderlich ist und auch keine anderen Hilfsmaßnahmen notwendig sind. Auch würde eine Zerkleinerung der Produkte der genannten Druckschrift zu keinen brauchbaren Produkten führen. Im einzelnen ist zu bemerken, daß der höchste Wert der Druckfestigkeit der Produkte in den Beispielen der deutschen Auslegeschrift 23 33 317 4 N/mm², der noch dazu offensichtlich der höchsten Rohdichte von 2 000 kg/m³ zuzuordnen ist, beträgt, während der niedrigste Wert der Druckfestigkeit bei den Produkten des erfindungsgemäßen Verfahrens bereits 6,5 N/mm² ist und dies schon bei einer Rohdichte von nur 400 kg/m³. Die schlechten Qualitätsdaten der Produkte dieser Druckschrift im Vergleich zu denen des erfindungsgemäßen Verfahrens sind zum größten Teil auf die nur teilweise Calciumsilikathydratbildung und die andere Schaumbildung, welche einen festigkeitsmindernden Einfluß ausübt, beim Verfahren der genannten Druckschrift zurückzuführen.

Durch das erfindungsgemäße Verfahren werden völlig andere Produkte erzielt als nach dem Verfahren der deutschen Auslegeschrift 20 23 089. Nach dem ersteren werden nämlich Produkte, deren Zusammensetzung einer 100 %-igen Umsetzung zu synthetischem Calciumsilikathydrat gleichkommt, erhalten, indem das Siliciumdioxyd und Calciumoxyd in den festgelegten dies ergebenden Molverhältnissen zu verwenden sind. Damit haben die in der deutschen Auslegeschrift 20 23 089 verwendeten mineralischen Stoffe, wie Gesteinsmehl, Tonstaub und Flugasche, nicht das geringste zu tun, indem deren Zusammensetzung und Reaktionsverhalten nicht geeignet sind, um synthetische Calciumsilikathydrate zu bilden. Durch die Schaumerzeugung mittels komprimierter Luft in der festgelegten Weise beim erfindungsgemäßen Verfahren gegenüber der ohne diese beim Verfahren der deutschen Auslegeschrift 20 23 089 und den viel niedrigeren Litergewichten von 30 bis 80 g/l des Schaumes beim ersteren gegenüber denen von 337 bis 505 g/l beim letzteren ergeben sich wiederum die bei der Erörterung der deutschen Auslegeschrift 26 17 153 dargelegten Vorteile der Erzielung eines stabilen Schaumes mit Mikroporen und der niedrigeren Dichte (Schüttgewichte von 250 bis 500 kg/m³) bei den Produkten des erfindungsgemäßen Verfahrens gegenüber denen der deutschen Auslegeschrift 20 23 089 mit ihren Makroporen und ihrer höheren Dichte (Schüttgewichte von etwa 900 bis 1 300 kg/m³). Hinzukommt die höhere Festigkeit der Produkte des erfindungsgemäßen Verfahrens schon allein wegen der Autoklavenhärtung an Stelle der hydraulischen Härtung beim Verfahren der deutschen Auslegeschrift 20 23 089.

Beim erfindungsgemäßen Verfahren werden ganz andere Ausgangsstoffe verwendet und damit ganz andere Endprodukte erhalten als beim Verfahren der deutschen Offenlegungsschrift 25 48 912. Im Gegensatz zum erfindungsgemäßen Verfahren kann aus keinem der in der genannten Druckschrift eingesetzten Materialien Gipshalbhydrat, Anhydrit, Portlandzement oder Tonerdeschmelzzement (dient zur Abbindebeschleunigung) bei der Autoklavenhärtung ein Calciumsilikathydrat entstehen. Auch sonst sind die Materialeigenschaften grundlegend verschieden. Wenn zum Beispiel Gips beziehungsweise Anhydrit zur Erzielung von Produkten mit einer Rohdichte von 500 kg/m³ mit Schaum aufgebläht und in Formen gegossen würde (eine Verpressung zu Gips- beziehungsweise Anhydritplatten ist unter diesen Bedingungen nicht möglich), dann würde ein derartiger Festigkeitsverlust eintreten, daß eine technische Anwendung eines derartigen Gips- beziehungsweise Anhydritproduktes ausscheiden würde. Die Einarbeitung von Schaum in Gips- beziehungsweise Anhydritmassen führt im günstigsten Fall zu Produkten mit Rohdichten von 900 bis 1 000 kg/m³, um Produkte mit überhaupt diskutablen Festigkeitswerten zu erhalten.

Es ist auch zu beachten, daß der mit Schaum aufgelockerte Gips, Anhydrit, Portlandzement beziehungsweise Tonerdeschmelzzement einem Preßvorgang zur Formung von Gips-, Anhydrit-, Portlandzement- beziehungsweise Tonerdeschmelzzementplatten unterworfen wird, wobei dann die Auflockerung zu einem großen Teil wieder aufgehoben wird. Eine Autoklavenhärtung ist für eine derartige Stoffzusammensetzung nicht geeignet. Dagegen werden erfindungsgemäß Calciumsilikatmassen der Autoklavenhärtung, aber keiner zusätzlichen Druckbeanspruchung unterworfen, so daß keine Aufhebung der Auflockerung eintritt.

Demgemäß werden nach dem Verfahren der deutschen Offenlegungsschrift 25 48 912 Produkte mit einer Druckfestigkeit von nur 0,15 N/mm² erhalten. Demgegenüber ist die geringste Druckfestigkeit von 6,5 N/mm² der nach dem erfindungsgemäßen Verfahren erhaltenen Produkte 43-mal so groß, der Größenunterschied beträgt also mehr als 1 Größenordnung. Die beiden Produkte sind also miteinander überhaupt nicht vergleichbar.

Hinzukommt noch, daß Gips beziehungsweise Anhydrit keine großen Mengen Schaum absorbieren kann. Daher braucht der Gips eine große Schaummenge (um überhaupt eine nennenswerte Schaummenge zu haben), von der der größte Teil zerstört wird.

Auch ist bei Gips eine hohe Schaummenge erforderlich, um überhaupt eine gewisse Druckfestigkeit zu erzielen. Dennoch beträgt diese wie bereits erwähnt um mehr als 1 Größenordnung weniger als bei den Produkten des erfindungsgemäßen Verfahrens.

Einen weiteren wesentlichen Vorteil des erfindungsgemäßen Verfahrens stellt es dar, daß durch das Einarbeiten des Mikroporenschaumes als letztes Bestandteiles in die Dispersion der festen Ausgangsstoffe in Wasser dieses äußerst schonend und mit der geringsten Zerstörung des Schaumes verläuft, während bei der umgekehrten Verfahrensweise nach der deutschen Offenlegungsschrift 25 48 912, nämlich dem Einmischen des Gipses, Anhydrites oder Zementes in trockener Form in den Schaum stets eine Teilzerstörung des Schaumes und eine Bildung von Makroporen eintritt. Durch die Schaumerzeugung mittels komprimierter Luft in der festgelegten Weise beim erfindungsgemäßen Verfahren gegenüber der ohne diese beim Verfahren der deutschen Offenlegungsschrift 25 48 912 wird der bei der Erörterung der deutschen Auslegeschrift 26 17 153 dargelegte Vorteil der Erzielung eines stabilen Schaumes mit Mikroporen bei den Produkten des erfindungsgemäßen Verfahrens gegenüber denen der deutschen Offenlegungsschrift 25 48 912 mit ihren Makroporen noch ausgeprägter. Die Entstehung eines solchen grobporigen Schaumes ergibt sich daraus, daß die Zeitdauer der Schaumentwicklung sehr viel länger ist. Bei der Schaumerzeugung mittels komprimierter Luft beim erfindungsgemäßen Verfahren geht dagegen die Schaumentwicklung augenblicklich vor sich, wobei der Schaum die Struktur einer Schlagsahne hat und die Schaumqualität sehr viel gleichmäßiger und stabiler ist.

Weiterhin bringen die viel niedrigeren Litergewichte der beim erfindungsgemäßen Verfahren verwendeten Schäume von 30 bis 80 g/l gegenüber dem Litergewicht des beim Verfahren der deutschen Offenlegungsschrift 25 48 912 verwendeten Schaumes von 250 g/l, also des 3-fachen der oberen Grenze der Litergewichte der Schäume beim erfindungsgemäßen Verfahren, wiederum den Vorteil der Erzielung von niedrigeren Dichten beim erfindungsgemäßen Verfahren, auf Materialien gleicher innewohnender Eigendichte bezogen (Gips beziehungsweise Anhydrit mit seiner von Haus aus geringeren Dichte ist mit Calciumsilikathydrat diesbezüglich nicht unmittelbar vergleichbar).

Gegenüber dem Verfahren der deutschen Offenlegungsschrift 25 48 912 bringt das erfindungsgemäße Verfahren auch den Vorteil mit sich, daß zur Schaumerzeugung neben der anionenaktiven grenzflächenaktiven Substanz kein Hilfsstoff verwendet werden muß, während beim Verfahren der deutschen Offenlegungsschrift 25 48 912 die Verwendung eines Aluminiumsalzes und von Kaliumsulfat zwingend vorgeschrieben ist. Beim erfindungsgemäßen Verfahren sind nämlich insbesondere wegen der verwendeten Ausgangsstoffe und der angewandten Schaumerzeugung keine besonderen Maßnahmen zur Stabilisierung des Schaumes erforderlich. So hätten Zusätze von der Art von Aluminiumsalzen und Kaliumsulfat, welche elektrolytisch wirksamen Substanzen in den nach dem genannten bekannten Verfahren verwendeten ganz andersartigen Materialien Gips, Anhydrit beziehungsweise Zement neben der Schaumstabilisierung auch zur Erreichung der gewünschten Verflüssigung dienen können, auch keinen Sinn.

Auch würde eine Zerkleinerung der Produkte der genannten Druckschrift zu keinen brauchbaren Produkten führen.

Gegenüber dem Verfahren der britischen Patentschrift 1 461 656 bringt das erfindungsgemäße Verfahren dieselben Vorteile wie gegenüber dem Verfahren der deutschen Auslegeschrift 23 33 317 mit sich, wobei auch die Materialunterschiede dieselben sind. Dies gilt auch gegenüber der Alternativverfahrensweise der Schaumerzeugung durch Rühren bei Einblasen von Luft, bei welcher auch nur Makroporen entstehen können. Dagegen trifft bei der Schaumerzeugung des erfindungsgemäßen Verfahrens der Flüssigkeitsstrom der verdünnten anionenaktiven grenzflächenaktiven Substanz in feinster Verteilung so auf die komprimierte Luft, daß eine ideale Schaumqualität erzielt wird.

Die Verwendung der in der britischen Patentschrift 1 461 656 eingesetzten Cellulosederivate beziehungsweise hydrolysierten Polyvinylester beim erfindungsgemäßen Verfahren wäre unerwünscht, da diese den Abbindevorgang des Kalkes blockieren würden. Andererseits führte aber das Verfahren der britischen Patentschrift 1 461 656 ohne die Verwendung von Cellulosederivaten beziehungsweise hydrolysierten Polyestern zu keinen befriedigenden Produkten, indem auf Seite 1, Zeile 30 bis 42 dieser Druckschrift bei der Erörterung des Verfahrens der deutschen Auslegeschrift 23 33 317 davon die Rede ist, daß es mit diesem Verfahren schwierig ist, feine und stabile Schäume von gleichmäßiger Größe in der Zementaufschlämmung zu erzeugen, und die Blasen zur Vereinigung unter Bildung eines grobporigeren Schaumes neigen, wobei in extremen Fällen die Schäume sogar zum Zusammenbrechen neigen und in bestimmten Fällen das Verfahren völlig undurchführbar ist, der Unterschied des Verfahrens der britischen Patentschrift 1 461 656 zu dem der deutschen Auslegeschrift 23 33 317 aber gerade in der Verwendung von bestimmten Cellulosederivaten und hydrolysierten Polyestern besteht. Durch diese Stelle, durch welche vom Verfahren der deutschen Auslegeschrift 23 33 317 geradezu abgeraten wird, ist anschaulich gezeigt, welche großen Schwierigkeiten hinsichtlich der Erzeugung von annehmbaren Schäumen bestanden.

Einen weiteren Vorteil des erfindungsgemäßen Verfahrens gegenüber dem Verfahren der britischen Patentschrift 1 461 656 bedeutet es, daß nach dem ersteren im Gegensatz zum letzteren außer der grenzflächenaktiven Substanz keine weiteren Hilfsstoffe, wie Schaumstabilisatoren und Schaumbeschleuniger, verwendet werden müssen.

Im einzelnen ist noch zu bemerken, daß durch das erfindungsgemäß Verfahren Produkte mit höherer Druckfestigkeit als durch das Verfahren der britischen Patentschrift 1 461 656 erhalten werden. Gegenüber den Produkten sämtlicher Beispiele mit Ausnahme des Beispieles 9 der britischen Patentschrift 1 461 656 sind die Werte der Druckfestigkeit sämtlicher Produkte des erfindungsgemäßen Verfahrens schon rein absolut (ohne Berücksichtigung der Rohdichten) höher, indem in den ersteren höchstens eine Druckfestigkeit von nur 4,5 N/mm$^2$ (Beispiel 2 der britischen Patentschrift 1 461 656) bei einer Rohdichte von 510 bis 520 kg/m$^3$ erreicht wurde, während bei den Produkten des erfindungsgemäßen Verfahrens der niedrigste Druckfestigkeitswert schon 6,5 N/mm$^2$ ist und dies bei einer·Rohdichte von nur 400 kg/m$^3$. Gegenüber dem Produkt des Beispieles 9 der britischen Patentschrift 1 461 656, dessen Druckfestigkeit 9,8 N/mm$^2$ bei der hohen Rohdichte von 880 bis 900 kg/m$^3$ ist, haben die nach dem erfindungsgemäßen Verfahren hergestellten Produkte bei einer Rohdichte von etwa 900 kg/m$^3$ Werte der Druckfestigkeit von 12 bis 15 N/mm$^2$, auch in diesem Fall sind also die letzteren eindeutig überlegen.

Beim erfindungsgemäßen Verfahren werden ganz andere Ausgangsstoffe verwendet und damit ganz andere Endprodukte erhalten als beim Verfahren der deutschen Offenlegungsschrift 25 45 006, wobei das in Bezug auf die deutsche Offenlegungsschrift 25 48 912 die Zemente betreffend Dargelegte auch hier gilt.

Im Gegensatz zum erfindungsgemäßen Verfahren kann aus den Ausgangsstoffen des Verfahrens der deutschen Offenlegungsschrift 25 45 006 bei der Autoklavenhärtung kein Calciumsilikathydrat entstehen, wobei eine solche für diese nicht geeignet ist.

Durch die Schaumerzeugung mittels komprimierter Luft in der festgelegten Weise beim erfindungsgemäßen Verfahren gegenüber der ohne diese beim Verfahren der deutschen Offenlegungsschrift 25 45 006 ergibt sich wiederum der bei der Erörterung der deutschen Auslegeschrift 26 17 153 dargelegte Vorteil der Erzielung eines stabilen Schaumes mit Mikroporen bei den Produkten des erfindungsgemäßen Verfahrens gegenüber denen der deutschen Offenlegungsschrift 25 45 006 mit ihren Makroporen.

Infolge der Tatsache, daß das höchste Litergewicht von 80 g/l der im erfindungsgemäßen Verfahren verwendeten Schäume 6- bis 7,5-mal geringer ist als die Litergewichte von etwa 500 bis 600 g/l der beim Verfahren der deutschen Offenlegungsschrift 25 45 006 einsetzbaren Schäume, können durch das erfindungsgemäße Verfahren Produkte mit höherer Dichte bei hoher Festigkeit erzielt werden. Dabei haben die Produkte des Verfahrens der deutschen Offenlegungsschrift 25 45 006 sehr schlechte Druckfestigkeitswerte. So kann bei Produkten mit Rohdichten von 1 000 bis 1 500 kg/m$^3$, die bevorzugt hergestellt werden, bestenfalls auch nur eine Druckfestigkeit von 5 N/mm$^2$ erzielt werden. Demgegenüber hat von den Produkten des erfindungsgemäßen Verfahrens selbst das mit der niedrigsten Druckfestigkeit von 6,5 N/mm$^2$ eine wesentlich höhere Druckfestigkeit und dies bereits bei einer Rohdichte von 400 kg/m$^3$.

Auch würde eine Zerkleinerung der Produkte der genannten Druckschrift im Gegensatz zum erfindungsgemäßen Verfahren zu keinen brauchbaren Produkten führen.

Beim erfindungsgemäßen Verfahren werden schon auf Grund der festgelegten Molverhältnisse von CaO zu SiO$_2$ von 0,8 : 1 bis 1,1 : 1 ganz andere Ausgangsgemische als nach dem Verfahren der deutschen Offenlegungsschrift 26 06 975 verwendet, indem der nach der letzteren, wenn auch weniger bevorzugt, verwendbare Kalksandstein demgegenüber SiO$_2$ in hohem Überschuß enthält. Für die Herstellung von Kalksandsteinen werden in der Regel Quarzsande mit einem Kornspektrum bis etwa 2 mm verwendet und die aufbereitete Kalksandsteinmischung wird mittels Druckpressen zu Steinformaten gepreßt und verdichtet. Aufgeschäumte Massen sind für dieses Verfahren aber nicht gut geeignet, zumal der Preßvorgang in der Regel eine Entlüfung (Vakuum) der Steinmasse vorsieht. Nach der Autoklavenhärtung besteht das Kalksandsteinmaterial aus etwa 85 Gew.-% Quarz und nur etwa 15 Gew.-% C-S-H-Phasen. Diese C-S-H-Phasen werden nur insoweit angestrebt, als es zur Verkittung der Sandkörner erforderlich ist. Es handelt sich also wie bereits oben erwähnt um eine Oberflächenreaktion, wobei im Endprodukt die Sandkörner in ihrer Ausgangsgröße nahezu unverändert vorliegen.

Auch gegenüber der bevorzugten Verwendung von Tonen nach der genannten Druckschrift bringt deren Fehlen beim erfindungsgemäßen Verfahren völlig andere Eigenschaften aufweisende Produkte, die ausschließlich C-S-H-Phasen (100 %-ige chemische Umsetzung) und weder freien Quarz noch freien Kalk enthalten, mit einer höheren Druckfestigkeit bei niedrigen Dichten mit sich. Durch die Gegenwart von $Al_2O_3$ wird nämlich die Bildung der beim erfindungsgemäßen Verfahren entstehenden C-S-H-Phasen gestört. Anders ausgedrückt handelt es sich dabei um die Herstellung von porosierten keramischen Massen, die einem Brennvorgang unterworfen werden und eine Alternative zum Vorgang der Blähtonherstellung darstellen. Die Einbindung eines derartigen Granulates in Putzmörtel wäre nicht vorteilhaft, da es sich um einen Zuschlagstoff mit unterschiedlichem Ausdehnungsverhalten handelt. Soweit nach dem Verfahren dieser Druckschrift Granulate hergestellt werden, sind also diese analog dem Blähton anwendbar. Da sich die nach dem erfindungsgemäßen Verfahren erhaltenen Calciumsilikatgranulate beziehungsweise -pulver neben ihrer außerordentlich hohen Druckfestigkeit in einem chemisch ausgeglichenen Endzustand befinden, sind sie nicht nur als druckfeste Leichtzuschlagstoffe, sondern auch sehr vorteilhaft als pulverförmige Füllstoffe, als Zusatzstoffe für keramische Massen (synthetischer Wollastonit), Anstrichfarben oder Kunststoffmassen geeignet.

Ein grundlegender Unterschied besteht auch darin, daß beim erfindungsgemäßen Verfahren die Ausgangsstoffe in Dispersion in Wasser, beim Verfahren der deutschen Offenlegungsschrift 26 06 975 dagegen im plastischen Zustand eingesetzt werden, da es sich eben um völlig verschiedene Materialien handelt, wobei die der deutschen Offenlegungsschrift 26 06 975 im erfindungsgemäßen Verfahren völlig ungeeignet wären.

Auch die Schaumerzeugung erfolgt beim erfindungsgemäßen Verfahren ganz anders als beim Verfahren der deutschen Offenlegungsschrift 26 06 975. Die Verwendung des beim letzteren eingesetzten Zweikomponentensystemes mit Kunststoffbestandteilen ist im erfindungsgemäßen Verfahren nicht vorgesehen und wäre für dieses auch nicht geeignet. Die Verwendung eines Strukturmateriales ist im Verfahren der genannten Druckschrift notwendig, um überhaupt zu einer Verfestigung des Stoffgemisches zu gelangen, wobei auf Seite 3, Zeile 12 von unten bis Seite 4, Zeile 9 der deutschen Offenlegungsschrift 26 06 975 davon die Rede ist, daß die Festigkeit der Schaummasse ohne die Verwendung von Strukturmaterialien nicht ausreicht, um den Beanspruchungen beim Vermischen der Massen Widerstand zu bieten, so daß der größte Teil der Luftblasen platzt und die dabei in der Praxis erreichte Porosität von selten über 10 % unzureichend ist, was beim erfindungsgemäßen Verfahren insbesondere wegen der Verwendung von ganz anderen Materialien nicht der Fall ist. Dies ist der Grund für den Einsatz von in der Wärme härtenden Kunststoffen beim Verfahren der deutschen Offenlegungsschrift 26 06 975. Keramische Rohstoffe sind nämlich in der Regel plastisch und sehr zäh. Die Verarbeitung erfordert entsprechende mechanische Kräfte. Deswegen sind die verschiedenen komplizierten Härtungszusätze erforderlich.

Soweit nach der deutschen Offenlegungsschrift 26 06 975 Granulate hergestellt werden, werden diese gleich im Verformungsarbeitsgang aus dem aufbereiteten Stoffgemisch geformt. Wenn jedoch eine Autoklavenerhärtung nachgeschaltet würde, wäre mit einem Zusammenbacken der Granulate zu rechnen. Es müßte nach abgeschlossener Autoklavenerhärtung erneut eine Zerkleinerung vorgenommen werden. Eine derartige Granulatbildung ohne Autoklavenhärtung ist nur sinnvoll, wenn hydraulische Bindemittel eingesetzt werden und diese ausschließlich die Erhärtung übernehmen. Dagegen werden beim erfindungsgemäßen Verfahren zunächst Vorprodukte hergestellt, die einer optimalen Umsetzung im Autoklaven unterzogen und danach in die gewünschten Korngruppen zerkleinert werden. Dies hat gegenüber dem Verfahren der genannten Druckschrift den Vorteil, daß auf Grund der hohen Druckfestigkeit bei relativ niedriger Rohdichte das Granulatspektrum günstig beeinflußt werden kann, wobei wegen der 100 %-igen chemischen Umsetzung im Kornspektrum keine Materialkomponente, die etwa der Ausgangskorngröße entspricht, zu finden ist. Dagegen werden beim Verfahren der deutschen Offenlegungsschrift 26 06 975 Produkte mit niedriger Festigkeit (Druckfestigkeit etwa 0,1 bis 0,5 N/mm²) erhalten. Dies führte bei der mechanischen Zerkleinerung zu einem hohen Staubanteil. Die Herstellung von Granulaten durch Zerkleinerung der gehärteten Produkte wäre also technisch nicht sinnvoll.

Auch können nach dem Verfahren der deutschen Offenlegungsschrift 26 06 975 nur Produkte mit höheren Rohdichten (beispielsweise 780 kg/m³) als nach dem erfindungsgemäßen Verfahren hergestellt werden, um überhaupt noch eine, wenn auch geringe, Festigkeit zu erzielen.

Bereits infolge der Tatsache, daß wegen des Fehlens einer Hydrothermalreaktion beim Verfahren der belgischen Patentschrift 530 812 die Bildung von Calciumsilikathydraten ausgeschlossen ist, während im Gegensatz dazu das erfindungsgemäße Verfahren Calciumsilikathydrate liefert, sind die Materialeigenschaften in beiden Fällen grundlegend verschieden. Während die durch das erfindungsgemäße Verfahren erhaltenen Calciumsilikatgranulate beziehungsweise -pulver ihre volle Druckfestigkeit bereits nach Abschluß der Autoklavenhärtung erreichen, wird bei den nach der genannten Druckschrift erhaltenen Kalk/Sand-Mörteln die Festigkeit erst nach 28 Tagen bei Lagerung in mit Feuchtigkeit gesättigter Luft ermittelt (vergleiche DIN 1 060, DIN 1 053 und DIN 18 555). Aber auch die Porenbildung und die Porenradien sind beim erfindungsgemäßen Verfahren infolge der verschiedenen Schaumerzeugung grundlegend anders. Im letztgenannten Fall wird nämlich wie bereits erwähnt ein Luftstrom in die Harzseifenlösung eingeleitet, während im erstgenannten Fall die durch Verdünnen mit Wasser bereitete Lösung der anionenaktiven grenzflächenaktiven Substanz in feinster Verteilung in komprimierte Luft eingesprüht wird. Damit ergeben sich zwischen dem erfindungsgemäßen Verfahren und dem der belgischen Patentschrift 530 812 dieselben Unterschiede wie zwischen dem ersteren und der bereits oben gewürdigten US-Patentschrift 3 144 346 sowie deutschen Auslegeschrift 23 33 317 und britischen Patentschrift 1 461 656. Nach dem Verfahren der belgischen Patentschrift 530 812 können nämlich nur Makroporen entstehen, während bei der Schaumerzeugung des erfindungsgemäßen Verfahrens der Flüssigkeitsstrom der verdünnten anionenaktiven grenzflächenaktiven Substanz in feinster Verteilung so auf die komprimierte Luft trifft, daß eine ideale Schaumqualität erzielt wird. Daraus ergibt sich eine viel günstigere Stabilität des im erfindungsgemäßen Verfahren erzeugten Schaumes. Auch ergibt sich aus der besseren Schaumqualität beim erfindungsgemäßen Verfahren, insbesondere hinsichtlich der Porigkeit, im Vergleich zum Verfahren der belgischen Patentschrift 530 812 allein aus statischen Gründen eine Begünstigung der Tragfähigkeit des erfindungsgemäß erzeugten mikroporigen Schaumes. Daraus, daß in der belgischen Patentschrift 530 812 keine Schaumparameter angegeben sind, ist ersichtlich, daß es sich bei diesem Verfahren im Gegensatz zum erfindungsgemäßen Verfahren nicht um eine definierte Beeinflussung der Rohdichte und des Schüttgewichtes handelt. Es ist vielmehr so, daß nach der genannten Druckschrift die Verbesserung der Verarbeitungseigenschaften des Kalk/Sand-Mörtels durch die Schaumeinarbeitung angestrebt wird. Auch ist nach dem Verfahren der belgischen Patentschrift 530 812 in Bezug auf das Einarbeiten von Schaum eine enge Begrenzung gegeben. Diese Begrenzung ergibt sich aus der Korngröße der verwendeten Zuschlagstoffe (Sand), dem Wassergehalt der Mischung und der Beeinflussung der Druckfestigkeit des Mörtels. Diese Art des Schaumeinarbeitens in einen Kalk/Sand-Mörtel bedeutet primär eine Begünstigung der Verarbeitungseigenschaften und nur sekundär eine Verminderung der Rohdichte des abgebundenen Mörtels, die auch nur höchstens etwa 10 bis 15 % beträgt. Im Gegensatz dazu wird beim erfindungsgemäßen Verfahren, bei welchem die Ausgangsrohstoffe auf die Erzielung einer vollständigen Umwandlung zu Calciumsilikat ausgerichtet sind, sogar bei extrem hohem Porenvolumen (= niedrige Rohdichte) eine außerordentlich hohe Druckfestigkeit sichergestellt. Aus dem Obigen ergibt sich, daß die Rohdichte der Kalk/Sandstein-Mörtel der belgischen Patentschrift 530 812 hoch, und zwar über 1 000 kg/m$^3$, insbesondere 1 300 bis 1 500 kg/m$^3$, ist und sie trotz dieser hohen Rohdichte Werte der Druckfestigkeit von höchstens etwa 5 N/mm$^2$ haben, während durch das erfindungsgemäße Verfahren schon bei der sehr viel geringeren Rohdichte von 400 kg/m$^3$ Werte der Druckfestigkeit um 7 N/mm$^2$ aufweisende Produkte erhalten werden.

Schon auf Grund der Tatsache, daß in der Druckschrift Chemical Abstracts, Vol. 82, Nr. 24, 16. Juni 1975, Seite 235, Nr. 159781v im Gegensatz zum erfindungsgemäßen Verfahren kein Einarbeiten eines Mikroporenschaumes vorgesehen ist und es sich ebensowenig um die Herstellung von druckfesten Leichtzuschlagstoffen handelt, liegt das letztere von der ersteren abseits. Aber auch die in der genannten Druckschrift erwähnte Vorreaktion ist mit der weiter unten beschriebenen eine zweckmäßige Ausführungsform des erfindungsgemäßen Verfahrens darstellenden Vorreaktion, die eine Abbindezeit zur Versteifung des Calciumsilikatgemisches ist, nicht vergleichbar. So haben die nach dem erfindungsgemäßen Verfahren hergestellten Calciumsilikatgranulate beziehungsweise -pulver eine viel höhere Festigkeit als die nach dem Verfahren der genannten Druckschrift enthaltenen Produkte. In der genannten Druckschrift ist nämlich für das erhaltenen Calciumsilikatprodukt eine Dichte von 220 kg/m$^3$ und eine Biegefestigkeit von 0,501 N/mm$^2$ angegeben. Daraus geht schon mit Sicherheit hervor, daß die Festigkeit der nach dem erfindungsgemäßen Verfahren erhaltenen Calciumsilikatprodukte viel höher ist als die der nach der genannten Druckschrift hergestellten. Auf die gleiche Rohdichte von etwa 400 kg/m$^3$ bezogen werden erfindungsgemäß Werte der Druckfestigkeit von 6,5 bis 7,5 N/mm$^2$, nach dem Verfahren der genannten Druckschrift dagegen Werte der Druckfestigkeit von bestenfalls nur 2,5 bis 3 N/mm$^2$ erreicht.

Die nach dem erfindungsgemäßen Verfahren hergestellten Calciumsilikatgranulate beziehungsweise -pulver zeichnen sich also durch ein besonders niedriges Schüttgewicht beziehungsweise eine besonders niedrige Rohdichte aus. Hieraus ergeben sich verschiedene Anwendungsbereiche.

Außer der Verwendung als Leichtzuschlagstoffe für Wärmedämmputze und -mörtel können die erfindungsgemäß hergestellten Calciumsilikatgranulate beziehungsweise -pulver vorteilhaft auch als Füllstoffe in der keramischen Industrie, in der chemischen Industrie, für Kunststoffe und bei der Papierherstellung verwendet werden.

Ein weiteres Anwendungsbeispiel ist die Verwendung als Zusatz in Verfahren zur Herstellung von feuerbeständigen Leichtbauplatten, beispielsweise im in der deutschen Patentanmeldung P 28 32 125.7 mit demselben Prioritätstag beschriebenen.

Als anionenaktive grenzflächenaktive Substanz kann vorteilhaft eine solche (als Lösung) mit einem Aktivsubstanzgehalt (vor dem Lösen in Wasser) von 30 bis 60 %, beispielsweise 50 %, verwendet werden. Es können aber auch durch Wasserentzug durch Trocknung erhaltene pulverförmige Produkte mit einem Aktivsubstanzgehalt bis zu 100 % eingesetzt werden.

Zweckmäßig wird die Konzentration der anionenaktiven grenzflächenaktiven Substanz in Wasser für den zum Homogenisieren zuzusetzenden mikroporigen stabilen Schaum bei Verwendung einer anionenaktiven grenzflächenaktiven Substanz mit einem Aktivsubstanzgehalt von 100 % zu etwa 1,0 bis 2,5 %, insbesondere 1,5 %, und bei Verwendung einer anionenaktiven grenzflächenaktiven Substanz mit einem Aktivsubstanzgehalt von 30 bis 60 % zu etwa 1,5 bis 3,5 % insbesondere 2 %, gewählt. Soweit keine anionenaktive grenzflächenaktive Substanz mit einem Aktivsubstanzgehalt von 100 % verwendet wird, beziehen sich diese Konzentrationsangaben auf das Produkt, wie es tatsächlich eingesetzt wurde, das heißt das, gegebenenfalls unreine, Chemieprodukt. Beispielsweise entspricht dann einer Konzentration der verwendeten anionenaktiven grenzflächenaktiven Substanz in Wasser von 2 % bei einem Aktivsubstanzgehalt der ersteren von 50 % eine Konzentration von 1 % reiner grenzflächenaktiver Substanz in Wasser.

Ein Beispiel für eine im erfindungsgemäßen Verfahren verwendbare anionenaktive grenzflächenaktive Substanz ist Natriumlaurylsulfat.

Zweckmäßig wird bei der Erzeugung des mikroporigen stabilen Schaumes die komprimierte Luft in einem Aktivschaumgenerator erzeugt und in diesen die durch Verdünnen mit Wasser bereitete Lösung der anionenaktiven grenzflächenaktiven Substanz in feinster Verteilung zur Bildung des mikroporigen stabilen Schaumes eingeführt. Dieser Schaum hat die Konsistenz einer Schlagsahne und kann den Aktivschaumgenerator über eine Schlauchverbindung beziehungsweise Rohrleitung verlassen und zum Dispergierarbeitsgang geführt werden.

Vorzugsweise wird als mikroporiger stabiler Schaum ein solcher mit einem Litergewicht von 50 bis 60 g/l verwendet.

Die Menge der anionenaktiven grenzflächenaktiven Substanz innerhalb des festgelegten Bereiches richtet sich nach dem erzielbaren Schaumvolumen beim Schaumerzeugen, wie im Aktivschaumgenerator, und ist in der Ausgangsmischung durch die angestrebte Rohdichte (Schüttgewicht) des herzustellenden Granulates beziehungsweise Pulvers bestimmt. Sie ist also eine Funktion des Blähfaktors

$$\left( = \frac{\text{Volumen des Fertigproduktes}}{\text{Volumen der eingesetzten Feststoffmenge}} \right)$$

und auch im Hinblick auf die Stabilität des Schaumes und die Gewährleistung einer schonenden Einarbeitung desselben in die Ausgangsmischung zu wählen.

Die mikroporige Produktstruktur der erfindungsgemäß hergestellten Calciumsilikatgranulate beziehungsweise -pulver ist von großer Bedeutung, da sie die angestrebten Produkteigenschaften, wie die Biege- und Druckfestigkeit und niedrige Rohdichte (Schüttgewicht), herbeiführt.

Zweckmäßig werden als Siliciumdioxyd und Calciumoxyd beziehungsweise diese enthaltende Materialien solche Rohstoffe, welche möglichst wenig Verunreinigungen enthalten, verwendet.

Es ist bevorzugt, als kristallines Siliciumdioxyd Quarzmehl, das heißt ein durch Feinmahlen von Quarzsand hergestelltes Pulver mit einer Feinheit von weniger als 100 µ, zu verwenden.

Die Mitverwendung von amorphem Siliciumdioxyd beziehungsweise dieses enthaltenden Materialien ist möglich. Vorteilhafter ist es jedoch, nur kristallines Siliciumdioxy beziehungsweise dieses enthaltende Materialien zu verwenden.

Vorzugsweise wird beziehungsweise werden als Calciumoxyd beziehungsweise dieses enthaltendes Material gebrannter Kalk und/oder Kalkhydrat verwendet.

Es ist bevorzugt, als Calciumoxyd beziehungsweise dieses enthaltende Materialien Gemische von gebranntem Kalk und Kalkhydrat zu verwenden. Dabei ist es besonders bevorzugt, vom Calciumoxyd beziehungsweise dieses enthaltenden Material einen Anteil von etwa 2/3 gebranntem Kalk und einen Anteil von etwa 1/3 Kalkhydrat zu verwenden. Dadurch wird nämlich die Löschwärme des gebrannten Kalkes zu einem bestimmten Teil vorweggenommen. Es kann aber auch allein gebrannter Kalk oder Kalkhydrat verwendet werden. Als gebrannter Kalk wird vorteilhaft Weißfeinkalk verwendet.

Zweckmäßig ist die Zusammensetzung der festen Ausgangsstoffmischung wie folgt :
etwa 50 bis 57 Gew.-% Quarzmehl
etwa 28 bis 33 Gew.-% gebrannter Kalk
etwa 14 bis 17 Gew.-% Kalkhydrat.

Wie bereits erwähnt kann der gebrannte Kalk ganz oder teilweise durch Kalkhydrat beziehungsweise das Kalkhydrat ganz oder teilweise durch gebrannten Kalk ersetzt werden.

Vorteilhaft wird das Wasser (Summe des zur Schaumbildung erforderlichen Wassers und des Mischwassers) in einer Menge von 45 bis 70 Gew.-%, insbesondere 48 bis 60 Gew.-%, bezogen auf die eingesetzte Feststoffmenge als Trockengewicht berechnet, verwendet. Von diesem Wasser werden zweckmäßig 8 bis 12 % als zur Schaumbildung erforderliches Wasser und 88 bis 92 % als Mischwasser eingesetzt.

Zweckmäßig wird nach dem Vermischen und Bereitstellen der Ausgangsstoffe für das Formen und vor dem Autoklavenhärten eine Vorreaktion mit einer Zeitdauer von mindestens 30 Minuten durchgeführt. Es ist dies anders ausgedrückt die Zeit, welche nach dem Herstellen und Einfüllen der Ausgangsmischung in die Form bis zur Durchführung der Autoklavenhärtung erforderlich ist. Innerhalb dieser Vorreaktionszeit erfolgt im erfindungsgemäßen Verfahren eine ausreichende Versteifung für die Beanspruchung durch die Autoklavenhärtung mittels hochgespannten Dampfes. Eine Verlängerung dieser Mindestvorreaktionszeit ist nicht nachteilig.

Vorzugsweise wird die Vorreaktion bei einer Temperatur von 70 bis 80 °C durchgeführt. Im Falle der Verwendung von gebranntem Kalk, wie Weißfeinkalk, ergibt sich diese Temperatur zwangsläufig bei Einsatz von verhältnismäßig geringen Wassermengen durch die Reaktionswärme des gebrannten Kalkes, wobei eine Wärmezuführung anderer Art nicht zu erfolgen hat. Im Falle der alleinigen Verwendung von Kalkhydrat ist dagegen zur Erreichung der genannten Temperatur ein Vorwärmen des zugesetzten Wassers (Mischwassers) auf 70 bis 80 °C erforderlich.

Das erfindungsgemäße Verfahren kann zweckmäßig wie folgt durchgeführt werden.

Zunächst wird ein Rohfeststoffausgangsgemisch aus Quarzmehl, gebranntem Kalk und Kalkhydrat durch Dispergieren in Wasser unter Zugabe des Schaumes der anionenaktiven grenzflächenaktiven Substanz in Wasser in einer als Mischer ausgebildeten Dispergierreaktionsvorrichtung bei schonendem und zerstörungsfreiem Einarbeiten der anionenaktiven grenzflächenaktiven Substanz homogenisiert.

Der mikroporige stabile Schaum der anionenaktiven grenzflächenaktiven Substanz ist zuvor aus einer durch Verdünnen mit Wasser bereiteten Lösung der anionenaktiven grenzflächenaktiven Substanz in feinster Verteilung in komprimierter Luft in einem Aktivschaumgenerator erzeugt worden. Dabei wird das Schaumvolumen so geregelt, daß es zur jeweiligen Charge passend unmittelbar der Dispergierreaktionsvorrichtung zugeführt werden kann.

Bei fester Einstellung der einzelnen Rohstoffbestandteile je Mischcharge und der Mischzeit für die Charge kann die Mischungsherstellung in vollautomatischem Ablauf erfolgen.

Im allgemeinen wird eine Mischzeit von 3 bis 5 Minuten für die Erzielung der Mischungshomogenität und zusätzlich 1,5 bis 2 Minuten für das Einarbeiten des mikroporigen stabilen Schaumes angewandt. Während der Mischungsherstellung findet das Löschen des gebrannten Kalkes statt. Die Mischzeit bildet aber keinen Teil der Vorreaktionszeit.

Die fertige Mischung wird in Formkästen, die in einzelne Kammern unterteilt sind, eingefüllt. Diese können auch kreisrund sein, was den Vorteil hat, daß mit ihnen eine optimale Ausfüllung des Autoklaven und damit eine erhebliche Energieeinsparung bei der Autoklavenhärtung möglich ist. Nach einer Vorreaktionszeit von etwa 30 Minuten erreicht die Masse eine solche Versteifung, daß die zur Unterteilung in die Formkästen eingehängten Trennwände herausgezogen werden können. Hierbei entstehen kleinere Materialblöcke, was sich auf den weiteren Produktionsgang vorteilhaft auswirkt. .

Die Formkästen mit den so erhaltenen Formlingen können zu einem Wagenzug zusammengestellt und in einen Autoklaven eingefahren oder übereinandergestapelt und mittels einer Krananlage in einen aufrecht stehenden Autoklaven eingesetzt werden, welchletzteres insbesondere bei kreisrunden Formkästen gemacht wird. Im Autoklaven wird die hydrothermale Erhärtung (Bildung von Calciumsilikathydraten) durchgeführt. Vorteilhaft werden bei der hydrothermalen Erhärtung Reaktionszeiten (Volldruckzeiträume, also ohne die Phasen der Druckauffüllung und der Entspannung) von 8 Stunden bei 10 atü, 7 Stunden bei 12 atü beziehungsweise 5 Stunden bei 15 atü angewandt.

Die gehärteten Calciumsilikatblöcke werden, gegebenenfalls nach einem Vorzerkleinern in einem Vorbrecher, mittels Walzenbrecher, wie Nockenwalzenbrecher, zur angestrebten Korngröße gebrochen, wobei das Zerkleinern auch im Hinblick darauf, ob als Produkte Granulate oder Pulver gewünscht werden, gesteuert wird.

Das aufbereitete Calciumsilikatkörnungsgemisch wird einem Trockner zugeführt und bis zu einer Restfeuchte von etwa 3 % getrocknet.

Das getrocknete Calciumsilikatkörnungsgemisch wird einer Siebmaschine zugeführt und nach den jeweils erforderlichen Korngruppen getrennt. Die Korngruppen beziehungsweise das Kornspektrum werden nach den jeweiligen Anwendungen gewählt. So sind zur Anwendung für Leichtzuschlagstoffe für Putze und Mörtel Korngruppen bis 2,5 mm und von 2,5 bis 4 mm erwünscht. Für die Anwendung als Füllstoff, beispielsweise für keramische Massen oder Kunstharzmischungen, ist eine zusätzliche entsprechende Feinmahlung zweckmäßig, zur Verwendung als Zusatz bei der Herstellung von feuerbeständigen Leichtbauplatten sind Korngrößen unter 1,5 mm erwünscht.

Dann werden die einzelnen Calciumsilikatkorngruppen in Silobehälter überführt. Aus diesen können sie entweder in Silowagen verladen oder in Säcke abgefüllt weden.

Die einzelnen Arbeitsgänge können insgesamt so ausgelegt werden, daß eine weitgehende Mechanisierung im funktionellen Ablauf möglich ist.

Auch ist das erfindungsgemäß Verfahren umweltfreundlich und verursacht keinerlei Schadstoffbelastung.

Aus der hohen Druckfestigkeit ergibt sich die spezielle Verwendbarkeit der erfindungsgemäß hergestellten Calciumsilikatgranulate beziehungsweise -pulver als druckfeste Zuschlagstoffe mit niedrigem Schüttgewicht. Die hohe Druckfestigkeit in Verbindung mit dem niederen Schüttgewicht der erfindungsgemäß hergestellten Zuschlagstoffe ist für ihre Überlegenheit bei ihrer Verwendung als mineralische Zuschlagstoffe in Putzmörteln mit wärmedämmender Funktion besonders entscheidend Demgegenüber haben andere leichte Zuschlagstoffe, wie Perlite beziehungsweise Vermiculite, nur Druckfestigkeiten von weniger als 0,2 N/mm².

Die Erfindung wird an Hand der folgenden Beispiele in Verbindung mit dem beiliegenden Fließschema näher erläutert.

Beispiel 1

Es wurden folgende Ausgangsfeststoffe verwendet:

50,4 Gew.-% Quarzmehl mit einer Korngröße unter 100 µ

33 Gew.-% Weißfeinkalk

16,5 Gew-% Kalkhydrat

Weiterhin wurden 60 Gew.-% Wasser, bezogen auf die Menge der Ausgangsfeststoffe, verwendet.

Es wurden das Quarzmehl aus einem Quarzmehlsilo 1, der Weißfeinkalk aus einem Weißfeinkalksilo 2 und das Kalkhydrat aus einem Kalkhydratsilo 3 über eine Waage 4 in einen Mischer 7 als Dispergiervorrichtung eingebracht. In diesen Mischer 7 wurde auch das Mischwasser aus einem Mischwasserbehälter 6 eingeführt.

Ferner wurde in einem Aktivschaumgenerator 5, bestehend aus einem Kompressor, der komprimierte Luft erzeugte, und einer Ansaugdüse, welche aus einem (nicht dargestellten) Flüssigkeitsbehälter Natriumlaurylsulfat mit einem Aktivsubstanzgehalt von 50 % in 2 %-iger Lösung in Wasser ansaugte und diese nach dem Injektorprinzip in den komprimierten Luftstrom einsprühte, ein mikroporiger stabiler Schaum erzeugt. So bildeten sich kleinste Luftbläschen zu einem schlagsahneartigen Schaum.

Nun erfolgte im Mischer 7 das Mischen unter Dispergieren der festen Ausgangsstoffe im Wasser, wobei zunächst 4 Minuten ohne Schaum gemischt und dann der wie vorstehend beschrieben erzeugte mikroporige stabile Schaum eingeführt und 2 Minuten lang in das Gemisch aus den festen Ausgangsstoffen und dem Wasser eingearbeitet wurde.

Danach wurde die fertige Mischung durch ein Rohr in Formkästen 8, die mittels Trennwände in einzelne Kammern unterteilt waren, eingefüllt. Nach einer Vorreaktionszeit von 30 Minuten bei 70 bis 80 °C, welche Temperatur sich durch die Löschreaktionswärme des Weißfeinkalkes einstellte, wurden die Trennwände aus den Formkästen herausgezogen. Die Formkästen 8 mit den so erhaltenen Formlingen wurden zu einem Wagenzug 9 zusammengestellt und in einen Autoklaven 10 zur hydrothermalen Erhärtung eingefahren. Diese erfolgte 7 Stunden (Volldruckzeitraum) bei einem Druck von 12 atü.

Der Wagenzug 9 mit den Formkästen 8 mit den gehärteten Calciumsilikatblöcken wurde aus den Autoklaven 10 nach dessen Entspannung ausgefahren.

Die Formkästen mit den gehärteten Calciumsilikatblöcken wurden vom Wagenzug 9 mittels eines Kranes angehoben, wobei eine Drehung um 90° erfolgte. Da die Umrandungsteile der Formkästen 8 konisch waren, gestatteten sie ein leichtes Herausfallen der Calciumsilikatblöcke aus den letzteren. Die Formkästen 8 wurden nach ihrer Entleerung wieder in den Kreislauf zur erneuten Befüllung zurückgeführt. Die aus den Formkästen 8 entfernten Calciumsilikatblöcke wurden mittels eines Frontladers oder über einen Vorsilobehälter in einen Walzenbrecher 11 eingebracht, in welchem sie gebrochen wurden. Das so gebrochene Calciumsilikat wurde durch ein Gurtbecherwerk 12 zu einem Trockner 13 gefördert. In diesem wurde es bis zu einer Restfeuchte von etwa 3 % getrocknet.

Das getrocknete Calciumsilikat mit Körnern verschiedener Korngröße wurde einer Siebmaschine 14 zugeführt und in dieser in eine Korngruppe mit Körnern bis 2,5 mm, welche in einem Behälter 15 gesammelt wurde, und in eine Korngruppe mit Körnern von 2,5 bis 4 mm, welche in einem anderen Behälter 16 gesammelt, wurde, getrennt, wobei das Überkorn durch eine Rücklaufleitung 17 zum Walzenbrecher 11 zurückgeführt wurde.

Die durchschnittlichen Materialparameterwerte der erhaltenen Calciumsilikatpulver waren wie folgt:

Druckfestigkeit (gemessen am kompakten Formkörper vor der Zerkleinerung) in N/mm²

bei einer Rohdichte von 400 kg/m³    7,5

bei einer Rohdichte von 700 kg/m³    10,2

Rohdichte in kg/m³    400 bis 700

Schüttgewicht in kg/m³    250 bis 500

(Schüttgewicht in kg/m³ der Korngrößen bis 2,5 mm    300 bis 500

Schüttgewicht in kg/m³ der Korngrößen von 2,5 bis 4 mm    250 bis 450)

Beispiel 2

Es wurde das Beispiel 1 mit dem Unterschied wiederholt, daß folgende, Ausgangsstoffe verwendet wurden:

50,4 Gew.-% Quarzmehl mit einer Korngröße unter 100 µ

42 Gew.-% gebrannter Kalk

7,6 Gew.-% Kalkhydrat

Die durchschnittlichen Materialparameterwerte der erhaltenen Calciumsilikatpulver waren wie folgt:

Druckfestigkeit (gemessen am kompakten Formkörper vor der Zerkleinerung) in N/mm²

bei einer Rohdichte von 400 kg/m³    7,5

bei einer Rohdichte von 700 kg/m³    10,2

Rohdichte in kg/m³    400 bis 700

Schüttgewicht in kg/m³    250 bis 500

(Schüttgewicht in kg/m³ der Korngrößen bis 2,5 mm    300 bis 500

Schüttgewicht in kg/m³ der Korngrößen von 2,5 bis 4 mm    250 bis 450)

Beispiel 3

Es wurde das Beispiel 1 mit dem Unterschied wiederholt, daß folgende Ausgangsstoffe verwendet wurden:

55,2 Gew.-% Quarzmehl mit einer Korngröße unter 100 μ

30,3 Gew.-% gebrannter Kalk

14,0 Gew.-% Kalkhydrat

Die durchschnittlichen Materialparameterwerte der erhaltenen Calciumsilikatpulver waren wie folgt:

Druckfestigkeit (gemessen am kompakten Formkörper vor der Zerkleinerung) in N/mm²

| | |
|---|---|
| bei einer Rohdichte von 400 kg/m³ | 6,5 |
| bei einer Rohdichte von 700 kg/m³ | 8,5 |
| Rohdichte in kg/m³ | 400 bis 700 |
| Schüttgewicht in kg/m³ | 250 bis 500 |
| (Schüttgewicht in kg/m³ der Korngrößen bis 2,5 mm | 300 bis 500 |
| Schüttgewicht in kg/m³ der Korngrößen von 2,5 bis 4 mm | 250 bis 450) |

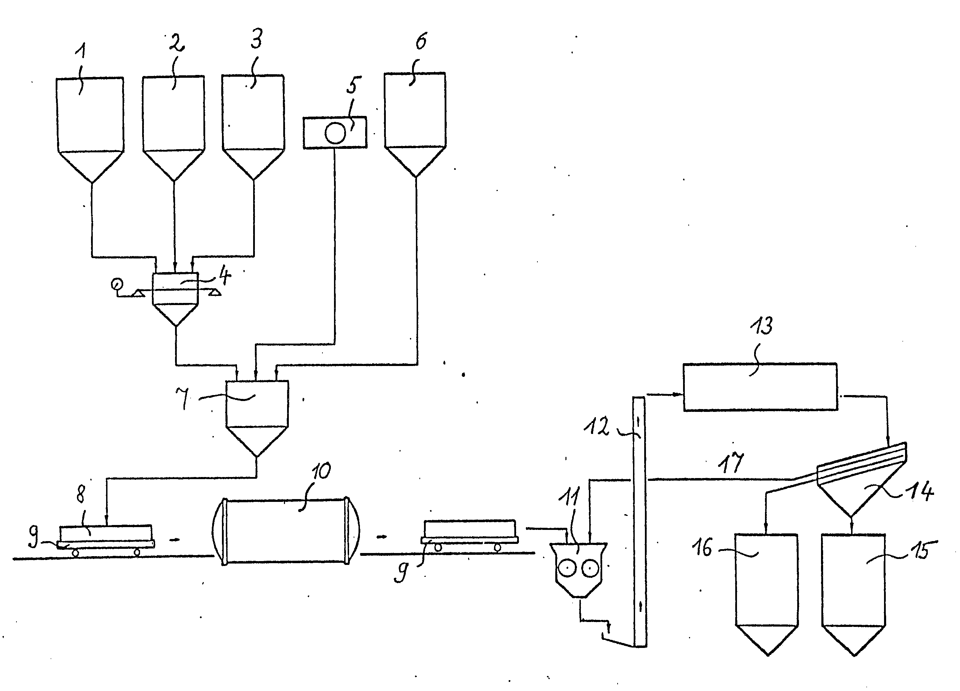

**Ansprüche**

1. Verfahren zur Herstellung von Calciumsilikatgranulaten beziehungsweise -pulvern mit Mikroporenstruktur durch Umsetzen von kristallinem und gegebenenfalls amorphem Siliciumdioxyd beziehungsweise dieses oder diese enthaltenden Materialien mit Calciumoxyd beziehungsweise dieses enthaltenden Materialien in einem Molverhältnis von CaO zu SiO$_2$ von 0,8 : 1 bis 1,1 : 1 unter Homogenisieren derselben durch Dispergieren der festen Ausgangsstoffe in Wasser unter Zugabe einer vorher in Wasser in Gegenwart von Luft in einen Schaum überführten anionenaktiven grenzflächenaktiven Substanz und Formen sowie Autoklavenhärten, dadurch gekennzeichnet, daß man als Schaum einen mikroporigen stabilen Schaum, welcher aus einer durch Verdünnen mit Wasser bereiteten Lösung der anionenaktiven grenzflächenaktiven Substanz in feinster Verteilung in komprimierter Luft erzeugt worden ist und ein Litergewicht von 30 bis 80 g/l aufweist, verwendet, wobei man die anionenaktive grenzflächenaktive Substanz in einer Menge von etwa 300 bis 600 g/m³ Fertigprodukt einsetzt und ohne Zuschlagstoff arbeitet sowie das gehärtete Produkt in an sich bekannter Weise zerkleinert, trocknet und klassiert.

2. Verfahren nach Anspruch 1, dadurch gekennzeichnet, daß man die Konzentration der anionenaktiven grenzflächenaktiven Substanz in Wasser für den zum Homogenisieren zuzusetzenden mikroporigen stabilen Schaum bei Verwendung einer anionenaktiven grenzflächenaktiven Substanz mit einem Aktivsubstanzgehalt von 100 % zu etwa 1,0 bis 2,5 %, insbesondere 1,5 %, und bei Verwendung einer anionenaktiven grenzflächenaktiven Substanz mit einem Aktivsubstanzgehalt von 30 bis 60 % zu etwa 1,5 bis 3,5 %, insbesondere 2 %, wählt.

3. Verfahren nach Anspruch 1 oder 2, dadurch gekennzeichnet, daß man als mikroporigen stabilen Schaum einen solchen mit einem Litergewicht von 50 bis 60 g/l verwendet.

4. Verfahren nach Anspruch 1 bis 3, dadurch gekennzeichnet, daß man als kristallines Siliciumdioxyd Quarzmehl verwendet.

5. Verfahren nach Anspruch 1 bis 4, dadurch gekennzeichnet, daß man als Calciumoxyd beziehungsweise dieses enthaltendes Material gebrannten Kalk und/oder Kalkhydrat verwendet.

6. Verfahren nach Anspruch 1 bis 5, dadurch gekennzeichnet, daß man vom Calciumoxyd beziehungsweise dieses enthaltenden Material einen Anteil von etwa 2/3 gebranntem Kalk und einen Anteil von etwa 1/3 Kalkhydrat verwendet.

7. Verfahren nach Anspruch 1 bis 6, dadurch gekennzeichnet, daß man nach dem Vermischen und Bereitstellen der Ausgangsstoffe für das Formen und vor dem Autoklavenhärten eine Vorreaktion mit einer Zeitdauer von mindestens 30 Minuten durchführt.

8. Verfahren nach Anspruch 7, dadurch gekennzeichnet, daß man die Vorreaktion bei einer Temperatur von 70 bis 80 °C durchführt.

**Claims**

1. A process for the preparation of calcium silicate granulates or powders, respectively, having a microporous structure by reacting crystalline and optionally amorphous silicon dioxide or materials containing this or these, respectively, with calcium oxide or materials containing this, respectively, in a molar ratio of CaO to SiO$_2$ of 0.8 : 1 to 1.1 : 1 with homogenizing them by dispersing the solid starting materials in water with adding an anion-active surface-active substance previously converted to a foam in water in the presence of air and by shaping and autoclave indurating, characterized in that one uses as a foam a microporous stabile foam which has been produced from a solution of an anion-active surface-active substance prepared by dilution with water in finest distribution in compressed air and has a liter weight of from 30 to 80 g/l the anion-active surface-active substance being employed in an amount of from about 300 to 600 g/m³ finished product and one works without aggregate as well as one comminutes, dries and classifies the indurated product in a manner known per se.

2. A process according to claim 1, characterized in that one chooses the concentration of the anion-active surface-active substance in water for the microporous stabile foam to be added to the homogenizing in case of using an anion-active surface-active substance having a content of active substance of 100 % to about 1.0 to 2.5 %, particularly 1.5 %, and in case of using an anion-active surface-active substance having a content of active substance of from 30 to 60 % to about 1.5 to 3.5 %, particularly 2 %.

3. A process according to claim 1 or 2, characterized in that one uses as a microporous stabile foam one having a liter weight of from 50 to 60 g/l.

4. A process according to claims 1 to 3, characterized in that one uses as crystalline silicium dioxide quartz flour.

5. A process according to claims 1 to 4, characterized in that one uses as calcium oxide or a material containing this, respectively, quicklime and/or calcium hydroxide. ·

6. A process according to claims 1 to 5, characterized in that one uses from the calcium oxide or the material containing this, respectively, a portion of about 2/3 of quicklime and a portion of about 1/3 of calcium hydroxide.

7. A process according to claims 1 to 6, characterized in that one carries out after the mixing and putting in readiness of the starting materials for the shaping and before the autoclave indurating a pre-reaction having a duration of at least 30 minutes.

8. A process according to claim 7, characterized in that one carries out the pre-reaction at a temperature of from 70 to 80 °C.

## Revendications

1. Procédé pour la fabrication de silicate de calcium sous forme de granules ou de poudre ayant une structure à micropores, par réaction de silice cristalline et éventuellement de silice amorphe ou de matières contenant ces deux produits ou seulement l'un d'eux, avec de l'oxyde de calcium ou une ou plusieurs matières le contenant, en respectant un rapport molaire $CaO/SiO_2$ compris entre 0,8/1 et 1,1/1 en homogénéisant par dispersion les matières de départ solides dans de l'eau, avec addition d'une substance tensio-active anionique dans de l'eau, préalablement transformée en mousse en présence d'air, cette transformation étant suivie d'une mise en forme et d'un durcissement dans un autoclave, caractérisé en ce que l'on utilise une mousse stable à micropores, obtenue à partir d'une solution préparée par dilution de la substance tensio-active anionique avec de l'eau, cette solution étant ensuite mise sous une forme finement divisée dans de l'air comprimé, la mousse présentant un poids au litre compris entre 30 et 80 g/l, et

en ce que l'on utilise la substance tensio-active anionique en une proportion comprise environ entre 300 et 600 g par $m^3$ de produit final, sans ajouter aucune matière auxiliaire et en ce qu'on broie, on sèche et on classe le produit durci de façon connue.

2. Procédé selon la revendication 1, caractérisé en ce que la concentration dans l'eau de la substance tensio-active anionique utilisée pour créer la mousse stable à micropores nécessaire pour l'homogénéisation est, dans le cas où cette substance tensio-active anionique présente une teneur en substance active de 100 %, comprise environ entre 1 et 2,5 %, et est en particulier 1,5 %, et, dans le cas où cette substance tensio-active anionique présente une teneur en substance active entre 30 et 60 %, cette concentration est comprise environ entre 1,5 et 3,5 %, et est en particulier 2 %.

3. Procédé selon la revendication 1 ou 2, caractérisé en ce que l'on emploie une mousse stable à micropores ayant un poids au litre compris entre 50 et 60 g/l.

4. Procédé selon l'une quelconque des revendications 1 à 3, caractérisé en ce que la silice cristalline est de la farine de quartz.

5. Procédé selon l'une quelconque des revendications 1 à 4, caractérisé en ce que l'oxyde de calcium ou la matière le contenant est de la chaux vive et/ou de la chaux hydratée.

6. Procédé selon l'une quelconque des revendications 1 à 5, caractérisé en ce que l'oxyde de calcium ou la matière le contenant est constituée pour environ 2/3 par de la chaux vive et pour environ 1/3 par de la chaux hydratée.

7. Procédé selon l'une quelconque des revendications 1 à 6, caractérisé en ce qu'après le mélange et la préparation des matières de départ pour la mise en forme avant le durcissement dans l'autoclave, on effectue une réaction préalable d'une durée d'au moins 30 minutes.

8. Procédé selon la revendication 7, caractérisé en ce que la réaction préalable est effectuée à une température comprise entre 70 et 80 °C.